(19) Europäisches Patentamt
European Patent Office
Office européen des brevets

(11) EP 2 039 019 B1

(12) **EUROPEAN PATENT SPECIFICATION**

(45) Date of publication and mention of the grant of the patent:
**20.01.2010 Bulletin 2010/03**

(21) Application number: **06754603.6**

(22) Date of filing: **28.06.2006**

(51) Int Cl.:
***H04B 7/005*** *(2006.01)* ***H04B 7/06*** *(2006.01)*

(86) International application number:
**PCT/EP2006/006244**

(87) International publication number:
**WO 2008/000284 (03.01.2008 Gazette 2008/01)**

# (54) METHOD AND SYSTEM FOR ROBUSTLY TRANSMITTING THE MINIMUM POWER IN MULTI-USER AND MULTI-ANTENNA COMMUNICATIONS SYSTEMS WITH IMPERFECT CHANNEL KNOWLEDGE

VERFAHREN UND SYSTEM ZUM ROBUSTEN SENDEN DER MINIMALEN LEISTUNG IN MEHRBENUTZER- UND MEHRANTENNEN-KOMMUNIKATIONSSYSTEMEN MIT UNVOLLKOMMENER KANALKENNTNIS

PROCÉDÉ ET SYSTÈME DESTINÉS À TRANSMETTRE SOLIDEMENT LA PUISSANCE MINIMALE DANS LES SYSTÈMES DE COMMUNICATION MULTIUTILISATEUR ET À PLUSIEURS ANTENNES AVEC UNE CONNAISSANCE IMPARFAITE DE LA VOIE DE TRANSMISSION

(84) Designated Contracting States:
**AT BE BG CH CY CZ DE DK EE ES FI FR GB GR HU IE IS IT LI LT LU LV MC NL PL PT RO SE SI SK TR**

(43) Date of publication of application:
**25.03.2009 Bulletin 2009/13**

(73) Proprietor: **Fundacio Privada Centre Tecnologic de Telecomunicacions de Catalunya**
**08860 Castelldefels (Barcelona) (ES)**

(72) Inventors:
- **PAYARO I LLISTERRI, Miquel**
  **E-08860 Castelldefels (barcelona) (ES)**
- **PASCUAL ISERTE, Antonio**
  **E-08860 Castelldefels (barcelona) (ES)**
- **LAGUNAS HERNANDEZ, Miquel, Angel**
  **E-08860 Castelldefels (barcelona) (ES)**

(74) Representative: **Carpintero Lopez, Francisco et al**
**Herrero & Asociados, S.L.**
**Alcalá 35**
**28014 Madrid (ES)**

(56) References cited:
- **AUTHORS: PEREZ PALOMAR, PASCUAL-ISERTE, CIOFFI, LAGUNAS - EDITORS: GERSHMAN AND SIDIROPOULOS: "Chapter 8 - Convex optimization theory applied to joint transmitter-receiver design in MIMO channels" SPACE-TIME PROCESSING FOR MIMO COMMUNICATIONS, 2005, pages 269-317, XP002426135 Chichester**
- **PASCUAL-ISERTE, PALOMAR, PEREZ-NEIRA, LAGUNAS: "A robust maximin apprach for MIMO communications with imperfect channel state information based on convex optimization" IEEE TRANSACTIONS ON SIGNAL PROCESSING, vol. 54, January 2006 (2006-01), pages 346-360, XP002426138**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 039 019 B1

## Description

FIELD OF THE INVENTION

The present invention relates to the downlink of wireless multi-antenna communication systems. More precisely, the present invention relates to a method and system for robustly transmitting the minimum power from a transmitter of a base station to the mobile users attached to the base station, while guaranteeing a certain quality of service per user.

STATE OF THE ART

In multi-antenna and multi-user downlink communication systems, the transmitter architecture design is usually aimed at the minimization of the transmitted power while guaranteeing a certain quality of service (QoS) per user, which is often related to the user-experienced mean squared error (MSE) or signal-to-interference-plus-noise ratio (SINR). Minimizing the total transmitted power has multiple advantages. Apart from the fact of lowering the energetic resources consumption, there is less electromagnetic radiation in the environment and the total system interference level is minimized. Similarly, it is always advisable to guarantee a predetermined, and possibly different, QoS for each user, which takes into account the kind of service that each user is demanding. For example, the QoS level is usually higher for a user that is requesting high quality video than that of one who is utilizing a voice service.

There is a vast literature on the design of minimum power linear transmission architectures assuming that both the transmitter (at the base station) and the user receivers (mobile terminals) have perfect knowledge of the channel state information (CSI), giving rise to the so-called solution of the downlink beamforming problem. Examples of such literature can be found in M. Bengtsson and B. Ottersten, "Optimal and Suboptimal Transmit Beamforming," in Handbook of Antennas in Wireless Communications, L. C. Godara, Ed. CRC Press, August 2001 or in M. Schubert and H. Boche, "Solution of the multiuser downlink beamforming problem with individual SINR constraints," IEEE Trans. On Vehicular Technology, vol. 53, no. 1, pp. 18-28, Jan. 2004.

However, in a practical scenario, specially for wireless systems where the fluctuations of the channel can be fast, assuming perfect CSI at both sides of the link is too optimistic.

Consequently, in the last years, the focus of research has also spotted to the more realistic scenario where the CSI is considered to be imperfect leading to the so called robust designs. The existing literature: D. Pérez, A. Pascual. J.M. Cioffi, M.A. Lagunas, "Convex optimization theory applied to joint transmitter-receiver design in MIMO channels" in SPACE-TIME PROCESSING FOR MIMO COMMUNICATIONS, Chapter 8, pp. 269-317, Chichester 2005, M. Bengtsson, "Robust and constrained downlink beamforming," in Proc. European Signal Processing Conference, Sep. 2000, M. Bengtsson and B. Ottersten, "Optimal and Suboptimal Transmit Beamforming," in Handbook of Antennas in Wireless Communications, L. C. Godara, Ed. CRC Press, August 2001 and M. Biguesh, S. Shahbazpanahi, and A. B. Gershman, "Robust downlink power control in wireless cellular systems," EURASIP Journal on Wireless Communications and Networking, no. 2, pp. 261-272, 2004, deal with optimal transmitter design assuming that an imperfect estimate of the channel covariance matrix is made available at the transmitter side and that the actual covariance matrix belongs to an uncertainty region around this estimate. The transmitter is then designed to transmit the minimum power such that the QoS constraints for each user are fulfilled for any possible covariance matrix inside the uncertainty region.

These well-known methods of modelling channel uncertainty consider the above referred imperfect or unreliable information in terms of an erroneous channel covariance matrix.

However, one of the problems of taking into account said imperfect or unreliable information in terms of an erroneous channel covariance matrix is that, in the mathematical derivations needed to design the transmitter, an approximation has to be done. This approximation implies that the obtained transmitter design is not optimal because the resulting transmitted power is higher than what it is necessary to guarantee the QoS constraints per user.

SUMMARY OF THE INVENTION

It is therefore an object of the present invention to provide a method of robustly transmitting the minimum downlink power from a transmitter of a base station of a cellular multi-user multi-antenna communications system to a plurality of mobile terminals which solves the problem mentioned in the last paragraph derived of well-known methods from the existing literature. In particular, it is an object of the present invention to provide a method of robustly transmitting the minimum downlink power from a transmitter of a base station to a plurality of mobile terminals in which, instead of considering the unreliable information in terms of an erroneous channel covariance matrix, the uncertainty is put in the channel estimate matrix itself. The method for robustly transmitting the minimum downlink power comprises the steps of, at a certain time instant t: acquiring at the transmitter a quality of service requirement from each of the mobile terminals; acquiring at the transmitter one channel estimate value from each of the transmitter antennae to each mobile antennae of each mobile terminal; defining at the transmitter an uncertainty region for said channel estimate values, said uncertainty region representing the imperfections derived from the channel estimation; and for a set of information symbols, carrying out at the transmitter a linear transformation of said set of information symbols into a set of linearly transformed symbols, said linear transformation being dependent on at least said quality of service requirements, said channel estimate values and said uncertainty region, said linear transformation minimizing the transmitted downlink power while guaranteeing said quality of service requirements for each mobile terminal for any actual channel falling inside said uncertainty region.

It is another object of the present invention to provide a transmitter comprising means adapted for carrying out the steps of the method. The transmitter is designed such that the total transmitted power is minimized and all the QoS constraints of each mobile terminal are fulfilled for any possible channel falling inside the specified uncertainty region. The obtained design is therefore robust to the uncertainty in the channel estimate.

It is a further object of the present invention to provide a base station comprising at least said transmitter.

It is another object of the present invention to provide a mobile communications system which comprises at least one of such base stations. In particular, it is an object of the present invention to provide a multi-user communications system, which comprises at least one base station which comprises at least one transmitter, said transmitter utilizing a plurality of $N$ antennae to simultaneously transmit information to a plurality of $K$ users or mobile terminals. In the most general set-up of said system, the mobile terminals are also equipped with a different number of antennae. Each signal transmitted through each one of the N antennae of the transmitter is a linear transformation of the information symbols that are to be sent to each one of the users or user terminals. This linear transformation is to be designed according to the information that is available at the transmitter side, which comprises a channel estimation matrix, a set of QoS requirements for each mobile terminal, and the shape and size of the uncertainty region.

The design criteria are established so as to choose a linear transformation such that the total transmitted power by the antennae at a transmitter of the base station is minimized and that the QoS requirements for each user (mobile terminal) are met for all the possible channel realizations inside the uncertainty region. This implies that, no matter which the realization of the actual channel inside the uncertainty region is, the QoS requirements are always fulfilled, therefore introducing robustness in the obtained design and system deployment.

It is another object of the present invention to provide a computer program comprising computer program code means adapted to perform the steps of the method when said program is run on a computer, on a digital signal processor, a field-programmable gate array, an application-specific integrated circuit, a micro-processor, a micro-controller, or any other form of programmable hardware.

The advantages of the proposed invention will become apparent in the description that follows.

## BRIEF DESCRIPTION OF THE DRAWINGS

To complete the description and in order to provide for a better understanding of the invention, a set of drawings is provided. Said drawings form an integral part of the description and illustrate a preferred embodiment of the invention, which should not be interpreted as restricting the scope of the invention, but just as an example of how the invention can be embodied. The drawings comprise the following figures:

Figure 1 is a schematic representation of the robust communications system utilized to simultaneously transmit an information symbol to each mobile terminal in accordance with an embodiment of the present invention.

Figure 2 is a schematic representation of the linear transformation of Figure 1, in which said linear transformation is decomposed in two linear transformations: a first linear transformation (11-a) and a second linear transformation (11-b). Said first linear transformation (11-b) being a power allocation transformation.

Figure 3 represents a flowchart of the method of the present invention: blocks 50 to 56 represent the actions that must be performed, and blocks 60 to 63 represent data which are stored and can be read when necessary.

Figure 4 is a schematic representation of the robust communications system utilized to simultaneously transmit an information symbol to each mobile terminal in accordance with a preferred embodiment of the present invention, in which each of the mobile terminals has a single antenna.

## DETAILED DESCRIPTION OF THE INVENTION

As already stated, one of the objects of the present invention is a method for transmitting the minimum power from a transmitter in a base station of a wireless multi-antenna communications system, in such a way that the QoS perceived by each mobile terminal is above a certain threshold (which from now on are referred to as QoS requirements) and in such a way that it takes into account that the knowledge of the channel at the transmitter and receiver sides is not perfect, obtaining a robust design.

In multi-antenna narrowband wireless communication systems, the actual channel is usually described by a matrix with complex entries. In practical situations, this channel matrix is not perfectly known and only an estimate is available (channel estimation matrix). To model the imperfections associated with the estimation process it can be assumed that the actual channel matrix lies inside an uncertainty region around the channel estimation matrix. The shape and size of this uncertainty region take into account the effects of the imperfections in the estimation process.

The implementation of the method of the present invention can be carried out according to the settings illustrated in figure 1. Figure 1 illustrates a transmitter (1) which comprises N radio frequency front ends (13-1, 13-2,..., 13-N) and N corresponding downlink antennae (14-1, 14-2, ..., 14-N), a wireless channel (20) through which uplink and downlink signals are to be transmitted, and K mobile terminals (30-1, 30-2, ..., 30-K), each of them comprising one or more mobile antennae (40-$1_1$, 40-$_2$,...,40-$1_{Z_1}$ 40-$2_1$, 40-$2_2$,...,40-$2_{Z_2}$,...,40-$K_1$, 40-$K_2$,..., 40 - $K_{ZK}$) , $Z_1$, $Z_2$,..., $Z_K$ being natural numbers. In general, each of the K mobile terminals can have a different number of mobile antennae: Thus, figure 1 illustrates a mobile terminal 30-1 which has "$Z_1$" mobile antennae, a mobile terminal 30-2 which has "$Z_2$" mobile antennae, and a mobile terminal 30-K which has "$Z_K$" mobile antennae. In a particular embodiment, each of the K mobile terminals (30-1, 30-2,..., 30-K) comprises a single mobile antenna (40-1, 40-2, ..., 40-K). This is represented in figure 4. Each of the mobile terminals (30-1, 30-2, ..., 30-K) has a QoS requirement, whose value depends on the kind of service that each mobile user is demanding at a certain time instant. The QoS requirements are not necessarily different for each of the K mobile terminals. Several mobile terminals can have the same QoS requirement, depending on the service they demand. For example, the QoS for a mobile terminal which requests a service of high quality video should be higher than that of a mobile terminal which requests a voice service. This QoS requirement is represented by $QoS_k(t)$, to indicate that it is dependent on the time instant at which it is measured, since a determined mobile terminal k can vary its QoS requirement, depending on the service it requests.

In order for the transmitter (1) to transmit the minimum downlink power to the K mobile terminals (30-1, 30-2, ..., 30-K), the transmitter (1) acquires (the acquisition process is explained below) and stores, at a certain time instant t, the following parameters:

a) The quality of service requirement of each of the K mobile terminals $QoS_k(t)$. As already explained, these K values $QoS_k(t)$ are in general different from each other, but some or all of these values can be the same.

b) An estimation of the actual value of the channel from each of the N transmitter antennae (14-1, 14-2, ..., 14-N) to each mobile antenna (40-$1_1$, 40-$1_2$,..., 40-$1_{Z_1}$, 40-$2_1$, 40-$2_2$,..., 40-$2_{Z_2}$,..., 40-$K_1$, 40-$K_2$,...,40-$K_{ZK}$) of each mobile terminal (30-1, 30-2, ..., 30-K). This is called "channel estimate values". Assuming that in the system there are K mobile terminals and a total number of mobile antennae (40-$1_1$, 40-$1_2$,..., 40-$1_{Z_1}$, 40-$2_1$, 40-$2_2$,..., 40-$2_{Z_2}$,..., 40-$K_1$, 40-$K_2$...., 40-$K_{ZK}$) of M, M≥K (M is not necessarily a multiple number of K, because not every mobile terminal (30-1, 30-2, ..., 30-K) needs to have the same number of mobile antennae as the other mobile terminals), the number of acquired channel estimate values from each of the N transmitter antennae (14-1, 14-2, ..., 14-N) of the transmitter (1) at a time instant t is equal to "M". Since the transmitter (1) has N antennae (14-1, 14-2, ..., 14-N), the total number of channel estimate values acquired at the transmitter (1) at a time instant t is "NxM". Each of these channel estimate values can be expressed by $\tilde{h}_{k,i}^{n}(t)$, wherein "n" indicates the nth antenna at the transmitter (1), "k" indicates de kth mobile terminal and "i" indicates the ith mobile antenna of the kth mobile terminal. With these channel estimate values $\tilde{h}_{k,i}^{n}(t)$, a channel estimate matrix can be built, having "M" rows and "N" columns.

In a particular embodiment, as illustrated in figure 4, each of the K mobile terminals (30-1, 30-2, ..., 30-K) has a single mobile antenna (40-1, 40-2, ..., 40-K). In other words, K=M. In this case, the channel estimate values $\tilde{h}_{k,i}^{n}(t)$ can be expressed as $\tilde{h}_{k}^{n}(t)$ wherein "n" indicates the nth antenna at the transmitter (1) and "k" indicates the kth mobile terminal. The channel estimate matrix $\tilde{H}(t)$ takes, at a certain time instant t, the following form:

$$\tilde{H}(t)=\begin{pmatrix} \tilde{h}_1^1(t) & \tilde{h}_1^2(t) & \cdots & \cdots & \tilde{h}_1^N(t) \\ \tilde{h}_2^1(t) & \tilde{h}_2^2(t) & \cdots & \cdots & \tilde{h}_2^N(t) \\ \cdots & \cdots & \cdots & \cdots & \cdots \\ \cdots & \cdots & \cdots & \cdots & \cdots \\ \tilde{h}_K^1(t) & \tilde{h}_K^2(t) & \cdots & \cdots & \tilde{h}_K^N(t) \end{pmatrix}$$

Both the acquired channel estimate matrix and the QoS requirements are either stored locally at the base station to which the transmitter (1) belongs or remotely somewhere else in the system.

Once this information is acquired and stored, an uncertainty region is specified from this information depending on the source of imperfections in the channel estimation process. The design of this uncertainty region will be described in detail later.

As illustrated in figure 1, the method of robustly transmitting the minimum downlink power at the transmitter (1) comprises the step of performing a linear transformation (11). The transmitter (1) processes, at a certain time instant t, a set of information symbols $s_1(t)$, $s_2(t)$, ..., $s_K(t)$, as indicated by reference number (10). Reference number (12) indicates the inputs to this linear transformation unit (11). Said inputs are the previously acquired QoS requirements, the previously acquired channel estimate values $\tilde{h}_{k,i}^n(t)$ (or $\tilde{h}_k^n(t)$ according to the system in figure 4) and the previously specified uncertainty region. For each set of K information symbols $s_1(t)$, $s_2(t)$, ..., $s_K(t)$, the linear transformation unit (11) provides N linearly transformed information symbols ($LTS_1(t)$, $LTS_2(t)$, ..., $LTS_N(t)$), which from now on will be referred to as linearly transformed symbols. At each certain synchronized time instant t, the transmitter (1) sends simultaneously N linearly transformed symbols ($LTS_1(t)$, $LTS_2(t)$, ..., $LTS_N(t)$) to the N radiofrequency front ends (13-1, 13-2, ..., 13-N), which are connected to respective transmitter antennae (14-1, 14-2, ..., 14-N).). To this end, a linearly transformed symbol (LTS1(t), $LTS_2(t)$, ..., $LTS_N(t)$) is transmitted through the N transmitter antennae (14-1, 14-2, ..., 14-N). This linear transformation (11) is designed according to the available information so that the transmitted power is minimized and the aforementioned QoS indicator is above a certain (and possibly different) threshold for each mobile terminal and for any possible realization of the actual channel inside the uncertainty region. This linear transformation (11) will be described in detail later.

Although figure 1 does not show the generation of the input information, as well as other steps carried out by or at the transmitter (1), such as the storing of the channel estimate or the storing of the QoS requirements, one skilled in the art will understand that said generation, further processing of the input information and storing of data does not form part of the present invention. As explained before, said processing and storing can be either carried out at the transmitter (2) itself or somewhere else in the system.

As indicated by reference number (12), the channel estimate (12-1), the QoS requirements or constraints per mobile terminal (12-3) and the uncertainty region around the channel estimate (12-2), that is to say, the region where the actual channel is supposed to belong to, are available parameters at the transmitter (1).

Preferably, the linear transformation carried out at the linear transformation unit (11) is divided into two consecutive steps, as represented in figure 2. The first step comprises a first linear transformation (11-a), while the second step comprises a second linear transformation (11-b). The first linear transformation (11-a) comprises a power allocation.

The first step, that is to say, the first linear transformation (11-a) which comprises a power allocation, assigns a certain amount of power to each one of the K information symbols $s_1(t)$, $s_2(t)$, ..., $s_K(t)$. This power allocation depends on, or is a function of, the channel estimate values (12-1), the quality of service $QoS_k(t)$ per mobile terminal requirements (12-3), and the uncertainty region around the channel estimate (12-2) as indicated in figure 2 by reference numbers (12-a-1, 12-a-2, 12-a-3). The output of this power allocation (and first linear transformation (11-a)) consists of K symbols ($FLTS_1(t)$, $FLTS_2(t)$, ..., $FLTS_K(t)$), which are the input of the second linear transformation (11-b). The second step, that is to say, the second linear transformation (11-b), is a generic transformation (each output depends linearly on all the inputs). Preferably, for simplicity reasons, the second linear transformation (11-b) depends only on the available channel estimate values $\tilde{h}_{k,i}^n(t)$ (or $\tilde{h}_k^n(t)$ in the case that each mobile terminal has a single mobile antenna, as illustrated in figure 4), as indicated in figure 2 by reference number (12-b). The output of this second step (11-b) is a set of N linearly transformed symbols ($LTS_1(t)$, $LTS_2(t)$, ..., $LTS_N(t)$), each of which is then conveyed to a respective radio frequency front end (13-1, 13-2, ..., 13-N) and subsequently transmitted through the respective N transmitter antennae (14-1, 14-2, ..., 14-N).

Figure 3 shows a flowchart of the steps carried out by the method of the present invention. Blocks 60 to 63 represent data which are acquired and stored, either locally or remotely, and can be read when necessary, while blocks 50 to 56 represent the actions that are to be performed. Among these "action" blocks 50 to 56, blocks 50 to 53 represent design steps, that is to say, steps in which data are calculated in order to later perform the robust downlink transmission while guaranteeing certain requirements. Block 54 represents the transmission step, in which the two previously designed linear transformations (11-a and 11-b) are applied to the information symbols. One skilled in the art will understand that the order of acquiring some of the parameters (for example, the channel estimate (50, 60) or the QoS requirements (63) is a simple matter of design, and therefore the modification of said order can be made without departing from the scope of the present invention.

Thus, at block (60) the channel estimate values $\tilde{h}_{k,j}^{n}(t)$ (or $\tilde{h}_{k}^{n}(t)$ in the case that each mobile terminal has a single mobile antenna) are stored. As explained before, these values can be stored in the form of a channel estimate matrix $\tilde{H}(t)$. Similarly, at block (63) the QoS requirements $QoS_k(t)$ are stored.

At block (50) of figure 3, the channel estimate values $\tilde{h}_{k,j}^{n}(t)$ or $\tilde{h}_{k}^{n}(t)$ are acquired by the transmitter (1) and stored (60) in the memory of the system. There are different procedures to obtain this channel estimate values. For example, in TDD systems, the transmitter (1) can estimate the uplink channel utilizing the signals received from the users during the uplink (for example, pilot symbols or a preamble), and utilize said uplink channel estimate as an estimate of the channel in the downlink, due to the electromagnetic reciprocity principle. In FDD-like systems, the channel seen by each user can be estimated by the user terminals themselves and, then, these channel estimations can be fed back to the base station, where all the estimates are collected to construct the global channel estimate from the base station to all the mobile terminals.

The chosen procedure to estimate the channel has a direct impact on the shape and size of the uncertainty region. Although the imperfections in the channel estimate (with respect to the actual channel) may have several origins, in particular embodiments of the invention two main sources of errors are considered: Gaussian estimation noise and quantization noise.

As far as Gaussian noise is concerned, there are two main cases of interest. In the first one, corresponding to the case where the channel is globally estimated at the transmitter exploiting electromagnetic reciprocity as commented before, the uncertainty region is modelled as a global hyper-sphere, with radius R, centred at the channel estimate matrix $\tilde{H}(t)$. In the second one, corresponding to the case where the channel seen by each mobile terminal is estimated by the mobile terminals themselves, the uncertainty region is modelled as K hyper-spheres (one for each mobile terminal). Each one of these K hyper-spheres is centred at the channel estimate seen by each of the K mobile terminals: $\tilde{h}_{k,1}^{1}(t)$, $\tilde{h}_{k,1}^{2}(t)$, ..., $\tilde{h}_{k,1}^{N}(t)$, $\tilde{h}_{k,2}^{1}(t)$, $\tilde{h}_{k,2}^{2}(t)$, ..., $\tilde{h}_{k,2}^{N}(t)$, ..., $\tilde{h}_{k,Z_K}^{1}(t)$, $\tilde{h}_{k,Z_K}^{2}(t)$, ..., $\tilde{h}_{k,Z_K}^{N}(t)$ and each one has a radius equal to $R_k$. In both cases, the radii R and $R_k$, with k ranging from 1 to K, of these hyper-spheres is directly related to the uncertainty on the estimate (the greater the uncertainty, the greater the radius of the hyper-sphere) and is also related to the probability of an actual channel falling inside said uncertainty region. Note that in the second case, the radii $R_k$ may be different for the different values of "k", allowing to model different qualities for the estimation of the K channels $\tilde{h}_{k,1}^{1}(t)$, $\tilde{h}_{k,1}^{2}(t)$, ..., $\tilde{h}_{k,1}^{N}(t)$, $\tilde{h}_{k,2}^{1}(t)$, $\tilde{h}_{k,2}^{2}(t)$, ..., $\tilde{h}_{k,2}^{N}(t)$, ..., $\tilde{h}_{k,Z_K}^{1}(t)$, $\tilde{h}_{k,Z_K}^{2}(t)$, ..., $\tilde{h}_{k,Z_K}^{N}(t)$, with k=1, ...,K, seen from the N transmitter antennae to each one of the K receivers.

On the contrary, when the uncertainty or source of errors is derived from the fact that the available estimate is a quantized version of the actual channel, then the uncertainty region is modelled by means of a hyper-rectangle centred at the channel estimate. The length of each one of the sides of the hyper-rectangle is the quantization step utilized in the quantization process.

It is important to highlight that, although in particular embodiments only these two sources of imperfections in the channel estimate have been taken into account when modelling the uncertainty region, the method according to the present invention is also valid for any source of imperfections in the channel estimate (and even for combinations of these sources), and therefore for any size and shape for the uncertainty region.

At block (51) of figure 3, the second linear transformation (11-b) of figure 2 is designed as a function of the stored channel estimate (60). The obtained linear transformation is stored in the memory of the system (61) (which could be either locally at the transmitter (1) or base station, or somewhere else remotely in the system). Different possibilities for this linear transformation (61) are described in particular embodiments of the present invention and are, for example, the zero-forcing design or the minimum mean squared error design, which are well-known methods of spatial equalization of multiantenna channels. These particular embodiments will be described later.

Block (52) of the flow chart of figure 3 represents the step at which the uncertainty region is specified according to the different possible source (or sources) of errors or imperfections taken into account when estimating the channel and stored in the memory of the system (62). As already mentioned, if the channel is estimated, for example, by the mobile terminals and fed back to the transmitter (1) through a digital feedback link (not described nor illustrated), the channel estimation available at the transmitter (1) is a quantized version of the actual channel, and, consequently, the shape and size of the uncertainty region will take into account this effect, giving rise to a hyper-rectangular region. If, on the contrary, Gaussian noise is taken into account for the channel estimation, the uncertainty region becomes a hyper-sphere whose radius R is directly related to the precision on the estimation process. The proper description of the uncertainty regions will be presented later. The uncertainty region is stored in the system, as represented by block (62).

At block (53) in figure 3, the power allocation of the first linear transformation ((11-a) in figure 2) for each of the K information symbols to be sent to the mobile terminals (30-1, 30-2, ..., 30-N) is designed in a robust way, according to the available information which comprises the channel estimate (60), the uncertainty region, expressed in terms of its size and shape (62) and the QoS per mobile terminal requirements (63), also stored in the system. In a particular embodiment, the power allocation is made to be also dependent on the previously calculated or designed second linear transformation (61) which is stored in the system. This power allocation (53) is designed in such a way that the minimum downlink power is transmitted, while guaranteeing the QoS requirements for each mobile terminal for any actual channel falling inside the designed uncertainty region. The total power transmitted by the transmitter of the base station is therefore minimized. Preferably, the QoS requirement $QoS_k(t)$ is the signal to interference plus noise ratio $\mathtt{sinr}_k^0(t)$ experienced by each mobile terminal (30-1, 30-2, ..., 30-N). Other possibilities include, but are not limited to, the mean square error (MSE) or the mutual information per user, which can be reformulated equivalently in terms of the signal to interference plus noise ratio without loss of generality.

As represented by block 54 in figure 3, once the power allocation is determined, the transmission of the set of K information symbols is performed. At each transmission, the set of K information symbols is transformed as indicated by the first linear transformation (11-a) obtaining K transformed symbols ($FLTS_1(t)$, $FLTS_2(t)$, ..., $FLTS_K(t)$) which are next transformed by the second linear transformation (11-b) obtaining the set of linearly transformed symbols ($LTS_1(t)$, $LTS_2(t)$, ..., $LTS_N(t)$). Next, each one of these symbols ($LTS_1(t)$, $LTS_2(t)$, ..., $LTS_N(t)$) is sent simultaneously to a radio frequency front end (13-1, 13-2,..., 13-N) and subsequently to a transmitter antenna (14-1, 14-2, ..., 14-N), from which the symbol is transmitted to the mobile terminals (30-1, 30-2, ..., 30-K).

Block 55 in figure 3 represents the step at which, once a transmission is over, it is checked if a new channel estimate (60) is available. If the answer is "yes", the execution flow continues at step 50. If the answer is "no", as represented by block 56, it is checked whether the uncertainty region (62) has changed. If the answer is "yes" (if the uncertainty region has changed), the execution flow continues at step 52, where the uncertainty region is re-defined. Otherwise, the execution flow continues at step 54, where a new transmission (of symbols) is performed.

Fast evolution over time of the channel conditions in wireless communications happens frequently. If this variation or evolution is faster than the update of the channel estimate (60), the uncertainty region may change to become greater, thus modelling the increase of uncertainty in the knowledge of the actual channel.

Next, the mathematical description of the two linear transformations (11-a, 11-b) involved in the method described above is given. For the sake of simplicity, the mobile terminals (30-1, 30-2, ..., 30-K) are considered to be equipped with a single antenna (40-1, 40-2, ..., 40-K), as illustrated in figure 4. This must not be considered as a limitation, but a simplification for the understanding of the method according to the present invention. On the contrary, the method can easily be extended to multi-antenna mobile terminals ($40\text{-}1_1$, $40\text{-}1_2$,..., $40\text{-}1_{Z_1}$, $40\text{-}2_1$, $40\text{-}2_2$,..., $40\text{-}2_{Z_2}$,..., $40\text{-}K_1$, $40\text{-}K_2$,..., $40\text{-}K_{Z_K}$) without departing from the scope of the present invention.

<u>Mathematical description</u>

The variables that are utilized are defined the first time they appear in the text as matrices, vectors or scalar quantities and the appropriate dimensions are also given.

The following operators are used: The operator $(\square)^H$ denotes hermitian transposition; the operators $\mathfrak{Re}(\square)^H$ and $\mathfrak{Im}(\square)$ extract, respectively, the real and imaginary parts of their arguments. The notation $\|\square\|$ is utilized to denote the norm of a vector; the notation $|\square|$ is utilized to denote the absolute value of a scalar quantity. The notation $[A]_{km}$

denotes the element in the $k$-th row and m-th column of matrix $A$. Similarly, $[\alpha]_k$ represents the $k$-th element of vector a. "Trace" is the sum of the values of the diagonal of a matrix. "$\sup_{X™R}$ ()" denotes the supremum with respect to the variable X, belonging to the domain R, of the expression contained within the brackets ( ).

At a given synchronous time instant $t$, the input-output relation of the system according to figure 1 can be expressed as

$$r(t) = H(t)B(t)P^{1/2}(t)s(t) + w(t) \ ,$$

where:

$r(t)$ is a $K\times 1$ column vector, whose $k$-th element contains the received information sample by the mobile terminal $k$ at time $t$. In the following, the index $k$ represents the mobile terminal and ranges from 1 to K.

$s(t)$ is a $K\times 1$ column vector containing the information symbols that are to be sent to the $K$ users at time instant $t$, which are $s_1(t)$, $s_2(t)$, ..., $s_K(t)$ as they appear in (10) in figure 1. Consequently, the $k$-th element of this vector is equal to $[s(t)]_k = s_k(t)$.

$H(t)$ is a $K\times N$ matrix, whose entry $(k,n)$ represents the flat fading base band equivalent channel gain from the n-th antenna at the transmitter (1) of the base station to the $k$-th mobile terminal. Consequently, the $k$-th row of the matrix $H(t)$ represents the channel seen by k-th user, this row being denoted by $h_k(t)$, which is a $1\times N$ row vector. Since, in practice, the actual channel matrix $H(t)$ is unknown to both the transmitter (1) and the receiver (in this case, the mobile terminals), it is convenient to define $\tilde{H}(t)$ as the channel estimate matrix which is available at time instant $t$ at both communication ends. Similarly, $\tilde{h}_k(t)$ is a $1\times N$ row vector that represents the channel estimate of the actual channel from the transmitter (1) of the base station to the k-th mobile terminal.

$P^{1/2}(t)$ is a $K\times K$ diagonal matrix, whose element$[P^{1/2}(t)]_{kk}$ represents the square root of the power allocated to the information symbol $s_k(t)$, $\left[P^{1/2}(t)\right]_{kk} = \sqrt{p_k(t)}$ . This matrix represents the first linear transformation (11-a) that is applied to the information symbols and that has to be robustly designed so that the transmitted power by the transmitter at the base station is minimized while guaranteeing the QoS constraints per mobile terminal. In addition, $P(t)$ is a diagonal $K\times K$ matrix such that $P(t)=P^{1/2}(t)P^{1/2}(t)$ and, consequently, the entries of $P(t)$ are given by $[P(t)]_{kk} = P_k(t)$.

$B(t)$ is a $N\times K$ matrix whose coefficients represent the second linear transformation in (11-b). This is an arbitrary linear transformation matrix which depends on the channel estimation matrix $\tilde{H}(t)$. Preferably, the linear transformation matrix $B(t)$ is chosen to be the zero forcing matrix $B(t)=H(t)^H(\tilde{H}(t)\tilde{H}(t)^H)^{-1}$, which is a widely utilized transmission matrix in the downlink literature. However, in other particular embodiments other choices of the matrix $B(t)$, such as the identity matrix $B(t)=I$ or the minimum mean square error matrix $B(t)=\tilde{H}(t)^H(\tilde{H}(t)\tilde{H}(t)^H+\alpha I)^{-1}$ for some scalar quantity $\alpha$ can be used. The kth column of matrix $B(t)$ is denoted by the $N\times 1$ vector $b_k(t)$ and the matrix $\overline{B}_k(t)$ is defined as the matrix with the same columns as matrix $B(t)$ except for kth column which is replaced by the all zeros column.

$w(t)$ is a $K\times 1$ column vector, whose $k$-th element contains the (thermal) noise sample generated by the front-end of $k$-th mobile terminal (receiver). In a particular embodiment, the power of each one of the entries of the vector $w(t)$ is given by $\sigma^2$.

Preferably, we additionally define $\mathrm{sinr}_k^0(t)$ as the QoS requirement $QoS_k(t)$ for mobile terminal $k$. The QoS requirement for each mobile terminal is therefore defined as the one for which, at all time instants t, the signal-to-interference plus noise ratio experienced by mobile terminal $k$ is above this threshold $\mathrm{sinr}_k^0(t)$ . Therefore, the acquired quality of service requirement $QoS_k(t)$ for each mobile terminal is equal to $\mathrm{sinr}_k^0(t)$ .

Next, the matrix $P^{1/2}(t)$ is designed as indicated in block 53 of figure 3, for a generic case:

The optimal power allocation, $P(t)$=$p^{1/2}(t)P^{1/2}(t)$, such that the total transmitted power is minimized and the QoS requirements are fulfilled (that is to say, they are above $\mathrm{sinr}_k^0(t)$ ) for the general case where $B(t)$ is an arbitrary matrix and where the uncertainty region is an arbitrary region, denoted by REG, is the solution to the following convex optimization problem:

$$\underset{P(t)}{\text{minimize}} \quad Trace\left\{B(t)P(t)B(t)^H\right\}$$

$$\text{subject to} \quad \sup_{X\in REG} \left(\tilde{h}_k(t)\bar{B}_k(t)+\left(x_k-\tilde{h}_k(t)\right)B(t)\right)P(t)\left(\bar{B}_k^H(t)\tilde{h}_k^H(t)+B^H(t)\left(x_k-\tilde{h}_k(t)\right)^H\right)-$$

$$-\left|\tilde{h}_k(t)b_k(t)\right|^2 p_k(t)/\mathrm{sinr}_k^0(t)+\sigma^2\leq 0, \quad \forall k\in\{1,2,\ldots,K\},$$

$$p_k(t)\geq 0,$$

where $X$ is any $K\times N$ matrix whose kth row is denoted by the $1\times N$ row vector $x_k(t)$, $X$ representing any matrix which belongs to the uncertainty region REG; Note that the previous convex optimization problem can be numerically solved in a very efficient way following the methods described, for example, in the book "Convex Optimization", S. Boyd, L. Vandenberghe, Cambridge University Press, 2004.

Next, the matrix $P(t)$ is designed as indicated in block 53 of figure 3, but this time for the particular case where $B(t)=\tilde{H}(t)^H(\tilde{H}(t)\tilde{H}(t)^H)^{-1}$, that is to say, $B(t)$ is chosen to be the zero forcing matrix, and for two particular cases of uncertainty regions: In two particular embodiments of the present invention two uncertainty regions are considered: (a) hyper-spherical regions and (b) hyper-rectangular regions, which, as already explained, correspond, respectively, to Gaussian estimation noise and quantization noise.

(a) Estimation Gaussian noise (hyper-spherical regions)

Two kind of hyper-spherical regions (a-1, a-2) are defined:

(a-1) The first region is composed of K hyper-spherical independent regions, which are defined by a set of K radii, $R_k(t)$, each one representing the radius of the hyper-spherical uncertainty region around (in other words, centred at) the estimate of the channel seen by kth user, $\tilde{h}_k(t)$. Consequently, this uncertainty region is modelled by limiting the norm of the error in the estimate independently for each channel seen by the corresponding mobile terminal (user). Formally, the uncertainty region, REG, can be defined as:

$$\text{REG}: \quad \left\|h_k(t)-\tilde{h}_k(t)\right\|\leq R_k(t), \quad \text{for all } k\in\{1,2,\ldots,K\}.$$

This constraint becomes meaningful in situations where each actual channel $\tilde{h}_k(t)$ is independently estimated by each one of the K users, and the estimation $\tilde{h}_k(t)$ is corrupted with or due to additive white Gaussian noise. The quality of each estimation is parameterized by the radius of the spherical region $R_k(t)$.

In this case, the entries of the matrix $P(t)$ that minimize the transmitted power while guaranteeing that each user (mobile terminal) signal-to-interference plus noise ratio is above the threshold $\mathrm{sinr}_k^0(t)$ are given by

$$p_k(t)=\mathrm{sinr}_k^0(t)\left(\mu(t)R_k^2(t)+\sigma^2\right), \quad \text{for all } k\in\{1,2,\ldots,K\}.$$

where $\mu(t)$ is a scalar positive quantity which is the unique solution to the following fixed point equation

$$\mu(t) = \lambda_{\max}\left(B(t)\left(\Gamma(t)\mu(t) + \Sigma(t)\right)B(t)^H\right),$$

where $\Gamma(t)$ and $\Sigma(t)$ are diagonal matrices whose entries are given by

$$[\Gamma(t)]_{kk} = \mathrm{sinr}_k^0(t)R_k^2(t) \qquad [\Sigma(t)]_{kk} = \mathrm{sinr}_k^0(t)\sigma^2,$$

for all $k \in \{1,2,...,K\}$,
and where $\lambda_{max}(A)$ represents the maximum eigenvalue of a matrix $A$. Fixed point equations can be numerically solved in a very efficient way utilizing iterative procedures.
(a-2) The second region consists of a global hyper-spherical uncertainty region and it is defined by its radius R(t). Consequently, this uncertainty region is modelled by limiting the sum of the squared norms of the error in the channel estimation, thus being defined as:

$$\text{REG}: \quad \sum_{k=1}^{K}\left\|h_k(t) - \tilde{h}_k(t)\right\|^2 \le R^2(t)$$

This constraint becomes meaningful in situations where the transmitter (1) estimates the uplink channel utilizing the signals received from the users (mobile terminals) during the uplink (for example, pilot symbols or a preamble), and utilize said uplink channel estimate as an estimate of the channel in the downlink, due to the electromagnetic reciprocity principle. In this case, the global quality of the estimation is parameterized by the radius of a unique spherical region $R(t)$.

In this case, the entries of the matrix $P(t)$ that minimize the transmitted power while guaranteeing that each user (mobile terminal) signal-to-interference plus noise ratio is above the threshold $\mathrm{sinr}_k^0(t)$ are given by

$$p_k(t) = \mathrm{sinr}_k^0(t)\left(\mu(t)R^2(t) + \sigma^2\right), \quad \text{for all } k \in \{1,2,\ldots,K\}.$$

where $\mu(t)$ is a scalar positive quantity which is the unique solution to the following fixed point equation

$$\mu(t) = \lambda_{\max}\left(B(t)\left(\Gamma(t)\mu(t) + \Sigma(t)\right)B(t)^H\right),$$

where $\Gamma(t)$ and $\Sigma(t)$ are KxK diagonal matrices whose entries are given by

$$[\Gamma(t)]_{kk} = \mathrm{sinr}_k^0(t)R^2(t) \qquad [\Sigma(t)]_{kk} = \mathrm{sinr}_k^0(t)\sigma^2,$$

for all $k \in \{1,2,...,K\}$,
and where $\lambda_{max}(A)$ represents the maximum eigenvalue of a matrix $A$.

(b) Quantization region (hyper-rectangular region)

The hyper-rectangular shape for the uncertainty region is defined as

$$\text{REG:}\quad \begin{array}{l} \left|\Re\mathrm{e}\left\{\left[h_k(t)\right]_n-\left[\tilde{h}_k(t)\right]_n\right\}\right|\le\rho_k(t) \\ \left|\Im\mathrm{m}\left\{\left[h_k(t)\right]_n-\left[\tilde{h}_k(t)\right]_n\right\}\right|\le\rho_k(t) \end{array}$$

for all $k \in \{1,2,...,K\}$
wherein $\rho_1(t),\rho_2(t),...,\rho_K(t)$ being positive real numbers.

This quantization error region becomes meaningful when the channel estimation matrix $\overline{H}(t)$ is a quantized version of the actual channel matrix $H(t)$. Such a situation occurs when there is a digital feedback link between the users (mobile terminals) and the transmitter (1). In this particular situation, the real and imaginary parts of the entries of the channel seen by the $k$-th mobile terminal are quantized with a quantization step equal to $2\rho_k(t)$. Therefore, the sides of said hyper-rectangle are defined by $2\rho_1(t),2\rho_2(t),...,2\rho_K(t)$.

In this case, the entries of the matrix $P^{1/2}(t)$ that minimize the transmitted power while guaranteeing that each user (mobile terminal) signal-to-interference plus noise ratio is above the threshold $\mathrm{sinr}_k^0(t)$ can be found by solving the following linear problem utilizing standard efficient methods, such as the simplex algorithm:

$$\underset{P(t)}{\text{minimize}}\quad Trace\left\{B(t)P(t)B(t)^H\right\}$$

$$\text{subject to}\quad \delta_{m,k}^H B(t)P(t)B(t)^H\delta_{m,k}-p_k(t)/\mathrm{sinr}_k^0(t)+\sigma^2\le 0,\quad \forall k\in\{1,2,\ldots,K\},m\in\{1,2,\ldots,2^{2N}\}$$
$$p_k(t)\ge 0,\qquad \text{(Eq.1)}$$

where:

$P(t)$ is a diagonal $K\times K$ matrix such that $P(t)=P^{1/2}(t)P^{1/2}(t)$ and, consequently, the entries of $P(t)$ are given by $[P(t)]_{kk}=P_k(t)$, as defined before;
$\delta_{m,k}$ is a $N\times 1$ vector, the real and imaginary parts of its entries being allowed to take only one of the two values: $\rho_k(t)$ or $-\rho_k(t)$. For a fixed k, there are $2^{2N}$ different such vectors, the index $m$ ranges from 1 to $2^{2N}$ so that all possible instances of the vector $\delta_{m,k}$ are taken into account. For example, for $N = 2$ the possible values for $\delta_{m,k}$ are

$$\delta_{m,k}=\begin{bmatrix}\pm\rho_k(t)\pm \mathrm{j}\rho_k(t)\\ \pm\rho_k(t)\pm \mathrm{j}\rho_k(t)\end{bmatrix}.$$

The solution to the optimization problem stated in (Eq.1) has to be computed numerically utilizing for example, as explained before, the simplex algorithm.

In summary, the present invention provides a method for transmitting the minimum power from a transmitter in a base station (downlink) of a wireless multi-antenna communications system, in such a way that the quality of service $QoS_k(t)$ perceived by each mobile terminal is above a certain threshold (QoS requirements) and in such a way that it takes into account that the knowledge of the channel at the transmitter and receiver sides is not perfect, obtaining a robust design.

In this text, the term "comprises" and its derivations (such as "comprising", etc.) should not be understood in an excluding sense, that is, these terms should not be interpreted as excluding the possibility that what is described and defined may include further elements, steps, etc.

The invention is obviously not limited to the specific embodiments described herein, but also encompasses any variations that may be considered by any person skilled in the art (for example, as regards the choice of components, configuration, etc.), within the general scope of the invention as defined in the appended claims.

## Claims

**1.** Method for robustly transmitting the minimum downlink power at a transmitter (1) of a cellular multi-user multi-antenna communications system with K mobile terminals (30-1, 30-2, ..., 30-K), attached to said transmitter (1), wherein K>1, wherein the transmitter (1) comprises N antennae (14-1, 14-2, ..., 14-N), and each of the K mobile terminals (30-1, 30-2, ..., 30-K) comprises one mobile antenna (40-1, 40-2, ..., 40-K),the method comprising the steps of, at a certain time instant t:

- acquiring at the transmitter (1) a quality of service requirement ($QoS_k(t)$) from each of the K mobile terminals (30-1, 30-2, ..., 30-K) of said multi-user system;
- acquiring at the transmitter (1) one channel estimate value from each of the transmitter antennae (14-1, 14-2, ..., 14-N) to said mobile antenna (40-1, 40-2, ..., 40-K) of each mobile terminal (30-1, 30-2, ..., 30-K) of said multi-user system;
- defining at the transmitter (1) an uncertainty region for said channel estimate values, said uncertainty region representing the imperfections derived from the channel estimation; and
- for a set of K information symbols ($s_1(t)$, $s_2(t)$, ..., $s_K(t)$), carrying out at the transmitter (1) a linear transformation (11) of said set of K information symbols ($s_1(t)$, $s_2(t)$, ..., $s_K(t)$) into a set of N linearly transformed symbols ($LTS_1(t)$, $LTS_2(t)$, ..., $LTS_N(t)$), said linear transformation (11) being dependent on at least said quality of service requirements ($QoS_K(t)$), said channel estimate values, and said uncertainty region; said linear transformation comprising allocating a power value ($p_k(t)$) to each of the K information symbols ($s_1(t)$, $s_2(t)$, ..., $s_K(t)$), said linear transformation (11) minimizing the transmitted downlink power while guaranteeing said quality of service requirements ($QoS_k(t)$) for each mobile terminal (30-1, 30-2, ..., 30-K) of said multi-user system for any actual channel falling inside said uncertainty region; said linear transformation (11) comprising:
- carrying out a first linear transformation (11-a, 12-a) among said K information symbols ($s_1(t)$, $s_2(t)$, ..., $s_K(t)$), thus obtaining K re-scaled symbols ($FLTS_1(t)$, $FLTS_2(t)$, ..., $FLTS_K(t)$), said first linear transformation (11-a, 12-a) comprising said power allocation ($p_k(t)$) and
- carrying out a second linear transformation (11-b, 12-b) of said K re-scaled symbols ($FLTS_1(t)$, $FLTS_2(t)$, ..., $FLTS_K(t)$) into N linearly transformed symbols ($LTS_1(t)$, $LTS_2(t)$, ..., $LTS_N(t)$); and

wherein the step of acquiring at the transmitter (1) a channel estimate value from each of the transmitter antennae (14-1, 14-2, ..., 14-N) to the mobile antenna (40-1, 40-2, ..., 40-K) of each mobile terminal (30-1, 30-2, ..., 30-K) comprises creating a KxN channel estimation matrix $\tilde{H}(t)$, wherein each of the K rows of said matrix is formed by a 1xN vector $\tilde{h}_k(t)$, said vector comprising N channel estimate values,
the method being **characterised in that**
the K values of allocated power ($p_k(t)$) which minimize the total transmitted power from the transmitter (1) to the K mobile terminals (30-1, 30-2, ..., 30-K) while guaranteeing the quality of service requirement ($QoS_k(t)$) for each of the K mobile terminals (30-1, 30-2, ..., 30-K) are obtained by solving the following convex optimization problem:

$$\underset{P(t)}{\text{minimize}} \quad Trace\left\{B(t)P(t)B(t)^H\right\}$$

$$\text{subject to} \quad \sup_{X \in REG} \left(\tilde{h}_k(t)\overline{B}_k(t) + \left(x_k - \tilde{h}_k(t)\right)B(t)\right)P(t)\left(\overline{B}_k^H(t)\tilde{h}_k^H(t) + B^H(t)\left(x_k - \tilde{h}_k(t)\right)^H\right) -$$
$$-\left|\tilde{h}_k(t)b_k(t)\right|^2 p_k(\mathrm{t})/\mathrm{sinr}_k^0(t) + \sigma^2 \le 0, \quad \forall k \in \{1,2,\ldots,K\},$$

$$p_k(t) \ge 0,$$

wherein:

$P(t)$ is a diagonal $K \times K$ matrix such that $P(t)=P^{1/2}(t)P^{1/2}(t)$, the entries of $P(t)$ being therefore given by $[P(t)]_{kk}=p_k(t)$, $P^{1/2}(t)$ being a diagonal $K \times K$ matrix representing the first linear transformation (11-a);
B(t) is an arbitrary NxK matrix which represents said second linear transformation (11-b, 12-b) and depends on the channel estimation matrix $\tilde{H}(t)$, wherein each of the K columns of said matrix B(t) is formed by a Nx1 vector $b_k(t)$;
$\overline{B}_k(t)$ is a matrix with the same columns as matrix $B(t)$ except for kth column which is replaced by an all-zeros column;
REG is the uncertainty region previously defined;
$X$ is any $K \times N$ matrix whose kth row is denoted by the $1 \times N$ row vector $x_k(t)$ and represents any matrix which belongs to the uncertainty region REG;
$\sigma^2$ is the thermal noise generated by the front-end of each of the K mobile terminals;

and $\mathrm{sinr}_k^0(t)$ is the quality of service requirement ($QoS_k(t)$) for each of the K mobile terminals and represents the threshold that the signal-to-interference plus noise ratio experienced by the k-th mobile terminal at a time instant t must overcome.

**2.** Method according to claim 1, wherein the uncertainty region is defined by a set of K hyper-spheres, each of said K hyper-spheres having a radius $R_k(t)$ and being centred at the channel estimate vector $\tilde{h}_k(t)$, thus fulfilling that $\|h_k(t)-\tilde{h}_k(t)\| \leq R_k(t)$, for all $1 \leq k \leq K$, $h_k(t)$ being the actual channel seen from the kth mobile terminal, t being a natural number that indicates a certain time instant.

**3.** Method according to claim 2, wherein the K values of allocated power ($p_k(t)$) which minimize the total transmitted power from the transmitter (1) to the K mobile terminals (30-1, 30-2, ..., 30-K), while guaranteeing the quality of service requirement ($QoS_k(t)$) for each of the K mobile terminals (30-1, 30-2, ..., 30-K) are given by:

$$p_k(t) = \mathrm{sinr}_k^0(t)\left(\mu(t)R_k^2(t)+\sigma^2\right)$$

for all $k \in \{1,2,...,K\}$

$\sigma^2$ is the thermal noise generated by the front-end of each of the K mobile terminals,

$\mathrm{sinr}_k^0(t)$ is the quality of service requirement ($QoS_k(t)$) for each of the K mobile terminals and represents the threshold that the signal-to-interference plus noise ratio experienced by the k-th mobile terminal at a time instant t must overcome;
$\mu(t)$ is a scalar positive quantity which is the unique solution to the following fixed point equation:

$$\mu(t)=\lambda_{\max}\left(B(t)\left(\Gamma(t)\mu(t)+\Sigma(t)\right)B(t)^H\right),$$

wherein $\Gamma(t)$ and $\Sigma(t)$ are KxK diagonal matrixes whose entries are given by

$$\left[\Gamma(t)\right]_{kk} = \mathrm{sinr}_k^0(t)R_k^2(t)$$

for all $1 \leq k \leq K$

$$\left[\sum(t)\right]_{kk} = \mathrm{sinr}_k^0(t)\sigma^2$$

for all $1 \leq k \leq K$
$\lambda_{\max}(A)$ represents the maximum eigenvalue of a matrix $A$; B(t) is a NxK matrix which represents said second linear transformation (11-b, 12-b) and depends on the channel estimation matrix $\tilde{H}(t)$ and takes the form of $B(t)=\tilde{H}(t)^H(\tilde{H}(t)\tilde{H}(t)^H)^{-1}$.

**4.** Method according to claim 1, wherein the uncertainty region is defined as a hyper-sphere having a radius R(t) centred at the channel estimate $\tilde{H}(t)$, thus fulfilling that $\sum_{k=1}^{K}\left\|h_k(t)-\tilde{h}_k(t)\right\|^2 \le R^2(t)$, $h_k(t)$ being the actual channel vector seen from the kth mobile terminal, t being a natural number that indicates a certain time instant.

**5.** Method according to claim 4, wherein the K values of allocated power ($p_k(t)$) which minimize the total transmitted power from the transmitter (1) to the K mobile terminals (30-1, 30-2, ..., 30-K), while guaranteeing the quality of service requirement ($QoS_k(t)$) for each of the K mobile terminals (30-1, 30-2, ..., 30-K) are given by:

$$p_k(t) = \mathrm{sinr}_k^0(t)\left(\mu(t)R^2(t)+\sigma^2\right)$$

for all $k \in \{1,2,...,K\}$ wherein:

$\sigma^2$ is the thermal noise generated by the front-end of each of the K receivers,

$\mathrm{sinr}_k^0(t)$ is the QoS requirement ($QoS_k(t)$) for each of the K mobile terminals and represents the threshold that the signal-to-interference plus noise ratio experienced by the k-th mobile terminal at a time instant t must overcome;

$\mu(t)$ is a scalar positive quantity which is the unique solution to the following fixed point equation:

$$\mu(t)=\lambda_{\max}\left(B(t)\left(\Gamma(t)\mu(t)+\Sigma(t)\right)B(t)^H\right),$$

wherein $\Gamma(t)$ and $\Sigma(t)$ are KxK diagonal matrices whose entries are given by

$$\left[\Gamma(t)\right]_{kk} = \mathrm{sinr}_k^0(t)R^2(t)$$

for all $1 \le k \le K$,

$$\left[\sum(t)\right]_{kk} = \mathrm{sinr}_k^0(t)\sigma^2$$

for all $1 \le k \le K$,

$\lambda_{\max}(A)$ represents the maximum eigenvalue of a matrix $A$; B(t) is a NxK matrix which represents said second linear transformation (11-b, 12-b) and depends on the channel estimation matrix $\tilde{H}(t)$ and takes the form of $B(t)=\tilde{H}(t)^H(\tilde{H}(t)\tilde{H}(t)^H)^{-1}$.

**6.** Method according to claim 1, wherein the uncertainty region is defined as a hyper-rectangle centred at the channel estimate $\tilde{H}(t)$, the sides of said hyper-rectangle being defined by $2\rho_1(t),2\rho_2(t),...,2\rho_K(t)$, $\rho_1(t),\rho_2(t),...,\rho_K(t)$ being positive real numbers, thus fulfilling

$$\left|\Re\mathrm{e}\left\{\left[h_k(t)\right]_n-\left[\tilde{h}_k(t)\right]_n\right\}\right| \le \rho_k(t)$$
$$\left|\Im\mathrm{m}\left\{\left[h_k(t)\right]_n-\left[\tilde{h}_k(t)\right]_n\right\}\right| \le \rho_k(t);$$

wherein
for all $1 \le k \le K$, $h_k(t)$ being the actual channel for the kth mobile terminal, for all $1 \le n \le N$, N being the number of antennae at the transmitter (1), t being a natural number that indicates a certain time instant.

**7.** Method according to claim 6, wherein the K values of allocated power ($p_k(t)$) which minimize the total transmitted power from the transmitter (1) to the K mobile terminals (30-1, 30-2, ..., 30-K), while guaranteeing the quality of service requirement ($QoS_k(t)$) for each of the K mobile terminals (30-1, 30-2, ..., 30-K) are obtained by solving the following linear problem:

$$\text{minimize}_p \qquad \text{Trace}\{B(t)P(t)B(t)^H\}$$

$$\text{subject to} \qquad \delta_{m,k}^H B(t)P(t)B(t)^H \delta_{m,k} - p_k(t)/\text{sinr}_k^0(t) + \sigma^2 \quad \le 0$$

$$\forall k \in \{1,2,\ldots,K\}, m \in \{1,2,\ldots 2^{2N}\}$$

$$p_k(t) \ge 0$$

wherein:

$P(t)$ is a diagonal $K \times K$ matrix such that $P(t)=P^{1/2}(t)P^{1/2}(t)$, the entries of $P(t)$ being therefore given by $[P(t)]_{kk} = p_k(t)$, $P^{1/2}(t)$ being a diagonal $K \times K$ matrix representing the first linear transformation (11-a);
B(t) is a NxK matrix which represents said second linear transformation (11-b, 12-b) and depends on the channel estimation matrix $\tilde{H}(t)$ and takes the form of $B(t)=\tilde{H}(t)^H(\tilde{H}(t)\tilde{H}(t)^H)^{-1}$;

$\text{sinr}_k^0(t)$ is the quality of service requirement ($QoS_k(t)$) for each of the K mobile terminals and represents the threshold that the signal-to-interference plus noise ratio experienced by the k-th mobile terminal at a time instant t must overcome;
$\delta_{m,k}$ is a $N \times 1$ vector, the real and imaginary parts of its entries being allowed to take only one of the two values: $\rho_k(t)$ or $-\rho_k(t)$, wherein m is a natural number which ranges from 1 to $2^{2N}$, and
$\sigma^2$ is the thermal noise generated by the front-end of each of the K mobile terminals.

**8.** Method according to any preceding claim, wherein the step of acquiring at the transmitter (1) said channel estimate values is made by receiving at the N antennae (14-1, 14-2, ..., 14-N) information from the K mobile terminals (30-1, 30-2, ..., 30-K) and by using said information to estimate the channel in the downlink.

**9.** Method according to any claim from 1 to 7, wherein the step of acquiring at the transmitter (1) said channel estimate values comprises:

- measuring the channel at each of the at least one mobile antenna ($40\text{-}1_1$, $40\text{-}1_2$, ..., $40\text{-}1_{Z_1}$, $40\text{-}2_1$, $40\text{-}2_2$, ..., $40\text{-}2_{Z_2}$, ..., $40\text{-}K_1$, $40\text{-}K_2$, ..., $40\text{-}K_{Z_K}$) of each of the K mobile terminals (30-1, 30-2, ..., 30-K), said channel comprising N channel responses from the N antennae (14-1, 14-2, ..., 14-N) of the transmitter (1);
- sending each of the channels measured in the previous step to the transmitter (1) for acquiring said channel estimate values through a feedback channel.

**10.** Method according to any preceding claim, further comprising the step of assigning each of said N linearly transformed symbols ($LTS_1(t)$, $LTS_2(t)$, ..., $LTS_N(t)$) to a different radiofrequency front end of a set of N radiofrequency front ends (13-1, 13-2, 13-N) for performing a transmission.

**11.** A transmitter (1) comprising means adapted for carrying out the steps of the method according to any claims from 1 to 10.

**12.** A base station which comprises at least a transmitter (1) according to claim 11.

**13.** A mobile communications system which comprises at least a base station according to claim 12.

**14.** A computer program comprising computer program code means adapted to perform the steps of the method according to any claims from 1 to 10when said program is run on a computer, a digital signal processor, a field-programmable gate array, an application-specific integrated circuit, a micro-processor, a micro-controller, or any other form of programmable hardware.

**Patentansprüche**

**1.** Verfahren zum robusten Senden der minimalen Downlink-Leistung von einem Sender (1) eines zellularen Mehrbenutzer-Mehrantennen-Kommunikationssystems mit K mobilen Endgeräten (30-1, 30-2, ..., 30-K), die dem Sender (1) zugeordnet sind, wobei K>1 ist, der Sender (1) N Antennen (14-1, 14-2, ..., 14-N) aufweist und jedes der K mobilen Endgeräte (30-1, 30-2, ..., 30-K) eine mobile Antenne (40-1, 40-2, ..., 40-K) aufweist, wobei das Verfahren zu einem bestimmten Zeitpunkt t die Schritte aufweist:

- Erfassen einer Betriebsgüteanforderung ($QoS_k$(t))-Anforderung von jedem der K mobilen Endgeräte (30-1, 30-2, ..., 30-K) des Mehrbenutzersystems an dem Sender (1);
- Erfassen eines Kanalschätzwerts von jeder der Senderantennen (14-1, 14-2, ..., 14-N) für die mobile Antenne (40-1, 40-2, ..., 40-K) jedes mobilen Endgeräts (30-1, 30-2, ..., 30-K) des Mehrbenutzersystems an dem Sender (1);
- Definieren eines Unschärfebereiches für die Kanalschätzwerte an dem Sender (1), wobei der Unschärfebereich die sich aus der Kanalschätzung abgeleiteten Fehler repräsentiert; und
- für eine Gruppe von K Informationssymbolen ($s_1$(t), $s_2$(t), ..., $s_K$(t)), Durchführen eine linearen Tranformation (11) der Gruppe von K Informationssymbolen ($s_1$(t), $s_2$(t), ..., $s_K$(t)) in eine Gruppe von N linear transformierten Symbolen ($LTS_1$(t), $LTS_2$(t), ..., $LTS_N$(t)) an dem Sender (1),

wobei die lineare Transformation (11) von mindestens den BetriebsgüteAnforderungen ($QoS_k$(t)), den Kanalschätzwerten und dem Unschärfebereich abhängt; die lineare Transformation Zuordnen eines Leistungswerts ($p_k$(t)) zu jedem der K Informationssymbole ($s_1$(t), $s_2$(t), ..., $s_K$(t)) aufweist, wobei die lineare Transformation (11) die gesendete Downlink-Leistung minimiert, während sie garantiert, dass die Betriebsgüteanforderungen ($QoS_k$(t)) für jedes mobile Endgerät (30-1, 30-2, ..., 30-K) von dem Mehrbenutzersystem für jeden aktuellen Kanal in den Unschärfebereich fallen;
wobei die lineare Transformation (11) aufweist:

- Durchführen einer ersten linearen Transformation (11-a, 12-a) unter den K Informationssymbolen ($s_1$(t), $s_2$(t), ..., $s_K$(t), wodurch somit K neu skalierte Symbole ($FLTS_1$(t), $FLTS_2$(t), ..., und $FLTS_K$(t)) erhalten werden, wobei die erste lineare Transformation (11-a, 12-a) die Leistungszuordnung ($p_k$(t) aufweist, und
- Durchführen einer zweiten linearen Transformation (11-b, 12-b) der K neu skalierten Symbole ($FLTS_1$(t), $FLTS_2$(t), ..., $FLTS_K$(t)) in N linear transformierte Symbole ($LTS_1$(t), $LTS_2$(t), ..., $LTS_N$(t)); und

wobei der Schritt des Erfassens eines Kanalschätzwerts von jeder der Senderantennen (14-1, 14-2, ..., 14-N) für die mobile Antenne (40-1, 40-2, ..., 40-K) jedes mobilen Endgeräts (30-1, 30-2, ..., 30-K) an dem Sender (1) Erzeugen einer KxN-Kanalschätzungsmatrix H(t) aufweist, wobei jede der K Zeilen der Matrix von einem 1xN Vektor $\tilde{h}_k(t)$ gebildet ist, wobei der Vektor N Kanalschätzwerte aufweist,
wobei das Verfahren **dadurch gekennzeichnet ist, dass**
die K Werte von zugeordneter Leistung ($p_k$(t)), die die gesamte von dem Sender (1) an die K mobilen Endgeräte (30-1, 30-2, ..., 30-K) gesendete Leistung minimieren, während sie die Betriebsgüteanforderung ($QoS_k$(t)) für jedes der K mobilen Endgeräte (30-1, 30-2, ..., 30-K) garantieren, durch Lösen des folgenden konvexen Optimierungsproblems erhalten werden:

$$\underset{P(t)}{\text{minimize}} \quad Trace\left\{B(t)P(t)B(t)^H\right\}$$

$$\text{subject to} \quad \sup_{X \in REG} \left(\tilde{h}_k(t)\overline{B}_k(t) + \left(x_k - \tilde{h}_k(t)\right)B(t)\right)P(t)\left(\overline{B}_k^H(t)\tilde{h}_k^H(t) + B^H(t)\left(x_k - \tilde{h}_k(t)\right)^H\right) -$$
$$-\left|\tilde{h}_k(t)b_k(t)\right|^2 p_k(t)/\mathrm{sinr}_k^0(t) + \sigma^2 \leq 0, \quad \forall k \in \{1,2,\ldots,K\},$$

$$p_k(t) \geq 0,$$

wobei:
P(t) eine diagonale KxK-Matrix ist, derartig, dass $P(t) = P^{1/2}(t)P^{1/2}(t)$ ist, wobei die Einträge von P(t) somit gegeben sind durch $[P(t)]_{kk} = p_k(t)$, und $P^{1/2}(t)$ eine diagonale KxK-Matrix ist, die die erste lineare Transformation (11-a) repräsentiert;
B(t) eine beliebige NxK-Matrix ist, die die zweite lineare Transformation (11-b, 12-b) repräsentiert und von der Kanalschätzungsmatrix H(t) abhängt, wobei jede der K Spalten der Matrix B(t) durch einen Nx1-Vektor $b_k(t)$ gebildet ist;
$\overline{B}_k(t)$ eine Matrix mit denselben Spalten wie die Matrix B(t) mit Ausnahme der k-ten Spalte ist, die durch eine Spalte mit nur Nullen ersetzt ist;
REG der vorangehend definierte Unschärfebereich ist;
X irgendeine KxN-Matrix ist, deren k-te-Zeile durch den 1xN Zeilenvektor $x_k(t)$ angegeben ist, und jede Matrix repräsentiert, die zu dem Unschärfebereich REG gehört;
$\sigma^2$ das durch das Front-End jedes der K mobilen Endgeräte erzeugte Wärmerauschen ist; und
$\sin_k^0(t)$ die Betriebsgüteanforderung ($QoS_k(t)$) für jedes der K mobilen Endgeräte ist und den Schwellenwert repräsentiert, den das von dem k-ten mobilen Endgerät erfahrene Signal-to-Interference-plus-noise-ratio zu einem Zeitpunkt t überschreiten muss.

2. Verfahren nach Anspruch 1, **dadurch gekennzeichnet, dass** der Unschärfebereich durch eine Gruppe von K Hyperkugeln definiert ist, wobei jede der K Hyperkugeln einen Radius $R_k(t)$ aufweist und an dem Kanalschätzvektor $\tilde{h}_k(t)$ zentriert ist, so dass $\|h_k(t)-\tilde{h}_k(t)\| \leq R_k(t)$, für alle $1 \leq k \leq K$ erfüllt ist, wobei $h_k(t)$ der von dem k-ten mobilen Endgerät gesehene aktuelle Kanal ist und t eine natürliche Zahl ist, die einen bestimmten Zeitpunkt angibt.

3. Verfahren nach Anspruch 2, **dadurch gekennzeichnet, dass** die K Werte von zugeordneter Leistung ($p_k(t)$), die die gesamte von dem Sender (1) an die K mobilen Endgeräte (30-1, 30-2, ..., 30-K) gesendete Leistung minimieren, während sie die Betriebsgüteanforderung ($QoS_k(t)$) für jedes der K mobilen Endgeräte (30-1, 30-2, ..., 30-K) garantieren, gegeben sind durch:

$$p_k(t) = \sin_k^0(t)\left(\mu(t)R_k^2(t) + \sigma^2\right)$$

für alle $k \, \varepsilon \{1,2,...,K\}$
wobei:

$\sigma^2$ das von dem Front-End von jedem der K mobilen Endgeräte erzeugte Wärmerauschen ist,
$\mathrm{sinr}_k^0(t)$ die Betriebsgüteanforderung ($QoS_k(t)$) für jedes der K mobilen Endgeräte ist und den Schwellenwert repräsentiert, den das von dem k-ten mobilen Endgerät erfahrene Signal-to-Interference-plus-noise-ratio zu einem Zeitpunkt t überschreiten muss;
$\mu(t)$ eine skalare positive Größe ist, die die eindeutige Lösung der folgenden Festpunktgleichung ist:
wobei $\Gamma(t)$ und $\Sigma(t)$ diagonale KxK-Matrizen sind, deren Einträge gegeben sind durch

$$[\Gamma(t)]_{kk} = \mathrm{sinr}_k^0(t)R_k^2(t)$$

für alle 1≤k≤K

$$\left[\sum(t)\right]_{kk} = \operatorname{sinr}_k^0(t)\sigma^2$$

für alle 1≤k≤K
$\lambda_{max}(A)$ den maximalen Eigenwert eines Matrix A repräsentiert;
B(t) eine NxK-Matrix ist, die die zweite lineare Transformation (11-b, 12-b) repräsentiert und von der Kanalschätzungsmatrix H(t) abhängt und die Form annimmt von

$$B(t) = \tilde{H}(t)^H(\tilde{H}(t)\tilde{H}(t)^H)^{-1}.$$

**4.** Verfahren nach Anspruch 1, **dadurch gekennzeichnet, dass** der Unschärfebereich als eine Hyperkugel mit einem Radius R(t) definiert ist, der an der Kanalschätzung H(t) zentriert ist, wodurch erfüllt wird, wobei $h_k(t)$ der von dem k-ten mobilen Endgerät gesehene aktuelle Kanalvektor ist und t eine natürliche Zahl ist, die einen bestimmten Zeitpunkt angibt.

**5.** Verfahren nach Anspruch 4, **dadurch gekennzeichnet, dass** die K Werte von zugeordneter Leistung ($p_k(t)$), die die gesamte von dem Sender (1) an die K mobilen Endgeräte (30-1, 30-2, ..., 30-K) gesendete Leistung minimieren, während sie die Betriebsgüteanforderung ($QoS_k(t)$) garantieren, für jedes der K mobilen Endgeräte (30-1, 30-2, ..., 30-K) gegeben sind durch:

$$p_k(t) = \sin_k^0(t)\left(\mu(t)R^2(t) + \sigma^2\right)$$

für alle k ε{1,2,...,K}
wobei:

$\sigma^2$ das von dem Front-End jedes der K Empfänger erzeugte Wärmerauschen ist,

$\sin_k^0(t)$ die QoS-Anforderung ($QoS_k(t)$) für jedes der K mobilen Endgeräte ist und den Schwellenwert repräsentiert, den das von dem k-ten mobilen Endgerät zu einem Zeitpunkt t erfahrene Signal-to-Interference-plus-noise-ratio überschreiten muss,
$\mu(t)$ eine skalare positive Größe ist, die die eindeutige Lösung der folgenden Festpunktgleichung ist:
wobei Γ(t) und Σ(t) diagonale KxK-Matrizen sind, deren Einträge gegeben sind durch

$$\left[\Gamma(t)\right]_{kk} = \operatorname{sinr}_k^0(t)R^2(t)$$

für alle 1≤k≤K

$$\left[\sum(t)\right]_{kk} = \operatorname{sinr}_k^0(t)\sigma^2$$

für alle 1≤k≤K
$\lambda_{max}(A)$ den maximalen Eigenwert einer Matrix A repräsentiert;
B(t) eine NxK-Matrix ist, die die zweite lineare Transformation (11-b, 12-b) repräsentiert und von der Kanalschätzungsmatrix H(t) abhängt und die Form annimmt von

**6.** Verfahren nach Anspruch 1, **dadurch gekennzeichnet, dass** der Unschärfebereich als ein Hyperrechteck definiert ist, das an der Kanalschätzung H(t) zentriert ist, wobei die Seiten des Hyperrechtecks definiert sind durch $2\rho_1(t)$, $2\rho_2(t)$, ..., $2\rho_k(t)$, wobei $\rho_1(t)$, $\rho_2(t)$, ..., $\rho_K(t)$ positive reelle Zahlen sind, die somit erfüllen ; wobei für alle $1 \leq k \leq K$, $h_k(t)$, $h_k(t)$ der aktuelle Kanal für das k-te mobile Endgerät ist, für alle $1 \leq n \leq N$, N die Anzahl von Antennen an dem Sender (1) ist und t eine natürliche Zahl ist, die einen bestimmten Zeitpunkt angibt.

**7.** Verfahren nach Anspruch 6, **dadurch gekennzeichnet, dass** die K Werte von zugeordneter Leistung ($p_k(t)$), die die gesamte von dem Sender (1) an die K mobilen Endgeräte (30-1, 30-2, ..., 30-K) gesendete Leistung minimieren, während sie die Betriebsgüteanforderung ($QoS_k(t)$) für jedes der K mobilen Endgeräte (30-1, 30-2, ..., 30-K) garantieren, durch Lösen des folgenden linearen Problems erhalten werden:

$$\text{minimize}_p \qquad \text{Trace}\{B(t)P(t)B(t)^H\}$$

$$\text{subject to} \qquad \delta_{m,k}^H B(t)P(t)B(t)^H \delta_{m,k} - p_k(t) / \text{sinr}_k^0(t) + \sigma^2 \quad \leq 0$$

$$\forall k \in \{1,2,\ldots,K\}, m \in \{1,2,\ldots 2^{2N}\}$$

gemäß

$$p_k(t) \geq 0$$

wobei:
P(t) eine diagonale KxK-Matrix ist, so dass $P(t)=P^{1/2}(t)P^{1/2}(t)$ ist, wobei die Einträge von P(t) somit gegeben sind durch $[P(t)]_{kk} = p_k(t)$ und $P^{1/2}(t)$ eine diagonale KxK-Matrix ist, die die erste lineare Transformation (11-a) repräsentiert;
B(t) eine NxK-Matrix ist, die die zweite lineare Transformation (11-b, 12-b) repräsentiert und von der Kanalschätzungsmatrix H(t) abhängt und die Form hat von $B(t) = \tilde{H}(t)^{II}(\tilde{H}(t)\tilde{H}(t)^{II})^{-1}$;

$\sin_k^0(t)$ die Betriebsgüteanforderung ($QoS_k(t)$) für jedes der K mobilen Endgeräte ist und einen Schwellenwert repräsentiert, den das von dem k-ten mobilen Endgerät zu einem Zeitpunkt t erfahrene Signal-to-Interference-plus-noise-ratio überschreiten muss;
$\delta_{mk}$ ein Nx1-Vektor ist, wobei die Real- und Imaginärteile seiner Einträge nur einen der beiden Werte annehmen können:

$\rho_k(t)$ oder $-\rho_k(t)$, wobei m eine natürliche Zahl ist, die im Bereich von 1 bis $2^{2N}$ liegt, und
$\sigma^2$ das von dem Front-End jedes der K mobilen Endgeräte erzeugte Wärmerauschen ist.

**8.** Verfahren nach einem der vorangehenden Ansprüche, **dadurch gekennzeichnet, dass** der Schritt des Erfassens der Kanalschätzwerte an dem Sender (1) durch Empfangen von Informationen von den K mobilen Endgeräten 30-1, 30-2, ..., 30-K) an den N-Antennen (14-1, 14-2, ..., 14-N) und durch Verwendung der Information zum Schätzen des Kanals in dem Downlink durchgeführt wird.

**9.** Verfahren nach einem der Ansprüche 1 bis 7, **dadurch gekennzeichnet, dass** der Schritt des Erfassens der Kanalschätzwerte an dem Sender (1) aufweist:

Messen des Kanals an jeder der mindestens einen mobilen Antenne ($40\text{-}1_1$, $40\text{-}1_2$, ..., $40\text{-}1_{Z1}$, $40\text{-}2_1$, $40\text{-}2_2$, ..., $40\text{-}2_{Z2}$, ..., $40\text{-}K_1$, $4\text{-}K_2$, ..., $40\text{-}K_{ZK}$) von jedem der K mobilen Endgeräte (30-1, 30-2, ..., 30-K), wobei der Kanal N Kanalantworten von den N Antennen (14-1, 14-2, ..., 14-N) des Senders (1) aufweist;

- Senden von jedem der in dem vorangehenden Schritt gemessenen Kanäle an den Sender (1) zum Erfassen der Kanalschätzwerte durch einen Feedback-Kanal.

**10.** Verfahren nach einem der vorangehenden Ansprüche, ferner umfassend den Schritt des Zuordnens von jedem der N linear transformierten Symbole ($LTS_1(t)$, $LTS_2(t)$, ..., $LTS_N(t)$) an ein anderes Hochfrequenz-Front-End einer Gruppe von N Hochfrequenz-Front-Ends (13-1, 13-2, 13-N) zum Durchführen einer Sendung.

**11.** Sender (1) mit Mitteln zur Durchführung der Schritte des Verfahrens gemäß einem der Ansprüche 1 bis 10.

**12.** Basisstation, die mindestens einen Sender (1) nach Anspruch 11 aufweist.

**13.** Mobiles Kommunikationssystem, das mindestens eine Basisstation nach Anspruch 12 aufweist.

**14.** Computerprogramm mit Computerprogrammcodemitteln zur Durchführung der Schritte des Verfahrens gemäß einem der Ansprüche 1 bis 10, wenn das Programm auf einem Computer, einem digitalen Signalprozessor, einem Field-Programmable-Gate-Array, einem anwendungsspezifischen Schaltkreis, einem Mikroprozessor, einem Mikrocontroller oder irgendeiner anderen Form von programmierbarer Hardware läuft.

## Revendications

**1.** Procédé destiné à transmettre de manière robuste la puissance minimale de liaison descendante au niveau d'un émetteur (1) d'un système de communications cellulaire multiutilisateur et à plusieurs antennes avec K terminaux mobiles (30 - 1, 30 - 2, ... , 30 - K), attachés audit émetteur (1), où K > 1, dans lequel l'émetteur (1) comprend N antennes (14 - 1, 14 - 2, ... , 14 - N), et chacun des K terminaux mobiles (30 - 1, 30 - 2, ... , 30 - K) comprend une antenne mobile (40 - 1, 40 - 2, ... , 40 - K), le procédé comprenant les étapes consistant à, à un certain instant t :

- acquérir au niveau de l'émetteur (1) une exigence de qualité de service ($QoS_k(t)$) à partir de chacun des K terminaux mobiles (30 - 1, 30 - 2, ... , 30 - K) dudit système multiutilisateur ;
- acquérir au niveau de l'émetteur (1) une valeur d'estimation de canal allant de chacune desdites antennes d'émetteur (14 - 1, 14 - 2, ... , 14 - N) à ladite antenne mobile (40 - 1, 40 - 2, ... , 40 - K) de chaque terminal mobile (30 - 1, 30 - 2, ... , 30 - K) dudit système multiutilisateur ;
- définir au niveau de l'émetteur (1) une région d'incertitude pour lesdites valeurs d'estimation de canal, ladite région d'incertitude représentant les imperfections obtenues à partir de l'estimation de canal ; et
- pour un ensemble de K symboles d'informations ($s_1(t)$, $s_2(t)$, ... , $s_K(t)$), exécuter au niveau de l'émetteur (1) une transformation linéaire (11) dudit ensemble de K symboles d'informations ($s_1(t)$, $s_2(t)$, ... , $s_K(t)$) en un ensemble de N symboles transformés de manière linéaire ($LTS_1(t)$, $LTS_2(t)$, ... , LTSN(t)), ladite transformation linéaire (11) dépendant au moins desdites exigences de qualité de service ($QoS_k(t)$), desdites valeurs d'estimation de canal et de ladite région d'incertitude ;

ladite transformation linéaire comprenant l'attribution d'une valeur de puissance ($p_k(t)$) à chacun des K symboles d'informations ($s_1(t)$, $s_2(t)$, ... , $s_K(t)$), ladite transformation linéaire (11) réduisant au minimum la puissance émise de liaison descendante tout en garantissant lesdites exigences de qualité de service ($QoS_k(t)$) pour chaque terminal mobile (30 - 1, 30 - 2, ... , 30 - K) dudit système multiutilisateur pour tout canal réel qui se situe à l'intérieur de ladite région d'incertitude ;
ladite transformation linéaire (11) comprenant :

- l'exécution d'une première transformation linéaire (11 - a, 12 - a) parmi lesdits K symboles d'informations ($s_1(t)$, $s_2(t)$, ... , $s_K(t)$), en obtenant de ce fait K symboles remis à l'échelle ($FLTS_1(t)$, $FLTS_2(t)$, ... , $FLTS_K(t)$), ladite première transformation linéaire (11 - a, 12 - a) comprenant ladite attribution de puissance ($p_k(t)$) ; et
- l'exécution d'une deuxième transformation linéaire (11 - b, 12 - b) desdits K symboles remis à l'échelle ($FLTS_1(t)$, $FLTS_2(t)$, ... , $FLTS_K(t)$) en N symboles transformés de manière linéaire ($LTS_1(t)$, $LTS_2(t)$, ... , $LTS_N(t)$) ; et

dans lequel l'étape consistant à acquérir, au niveau de l'émetteur (1), une valeur d'estimation de canal allant de chacune desdites antennes d'émetteur (14 - 1, 14 - 2, ... , 14 - N) à ladite antenne mobile (40 - 1, 40 - 2, ... , 40 - K) de chaque terminal mobile (30 - 1, 30 - 2, ... , 30 - K), comprend l'étape consistant à créer une matrice $\tilde{H}(t)$ d'estimation de canal $K \times N$, dans laquelle chacune des K lignes de ladite matrice est constituée par un vecteur $\tilde{h}_k(t)$ $1 \times N$, ledit vecteur comprenant N valeurs d'estimation de canal,
le procédé étant **caractérisée en ce que** :

les K valeurs de la puissance attribuée ($p_k(t)$) qui réduisent au minimum la puissance totale émise par l'émetteur (1) vers les K terminaux mobiles (30 - 1, 30 - 2, ... , 30 - K) tout en garantissant l'exigence de qualité de service ($QoS_k(t)$) pour chacun des K terminaux mobiles (30 - 1, 30 - 2, ... , 30 - K), sont obtenues en résolvant le problème d'optimisation convexe suivant :

$$\underset{P(t)}{\text{minimiser}} \quad Trace\left\{B(t)\,P(t)\,B(t)^H\right\}$$

à condition que

$$\sup_{x \in REG} (\tilde{h}_k(t)\overline{B}_k(t) + (x_k - \tilde{h}_k(t))B(t))P(t)(\overline{B}_k^{\,H}(t)\tilde{h}_k^{\,H}(t) + B^H(t)(x_k - \tilde{h}_k(t))^H) -$$

$$-\left|\tilde{h}_k(t)b_k(t)\right|^2 p_k(t)/\mathrm{sinr}_k^0(t) + \sigma^2 \le 0\,, \qquad \forall\ \mathrm{k} \in \{1, 2, \dots, \mathrm{K}\},$$

$$p_k(t) \ge 0,$$

où :

*P(t)* est une matrice diagonale $K \times K$ telle que $P(t) = p^{1/2}(t)\, p^{1/2}(t)$, les entrées de *P(t)* étant donc données par $[P(t)]k_k = p_k(t)$,
$p^{1/2}(t)$ étant une matrice diagonale $K \times K$ qui représente la première transformation linéaire (11 - a) ;
*B(t)* est une matrice arbitraire $N \times K$ qui représente ladite deuxième transformation linéaire (11 - b, 12 - b) et dépend de la matrice d'estimation de canal $\tilde{H}(t)$, dans laquelle chacune des K colonnes de ladite matrice *B(t)* est formée par un vecteur $b_k(t)$ $N \times 1$ ;
$\overline{B}_k(t)$ est une matrice qui présente les mêmes colonnes que la matrice *B(t)* si ce n'est que la k[ième] colonne est remplacée par une colonne de zéros ;
*REG* est la région d'incertitude définie précédemment ;
*X* est n'importe quelle matrice $K \times N$ dont la k[ième] ligne est désignée par le vecteur de ligne $x_k(t)$ $1 \times N$ et représente n'importe quelle matrice qui appartient à la région d'incertitude *REG* ;
$\sigma^2$ est le bruit thermique généré par l'extrémité frontale de chacun des K terminaux mobiles ;

et $\mathrm{sinr}_k^0(t)$ est l'exigence de qualité de service ($QoS_k(t)$) pour chacun des K terminaux mobiles et représente le seuil que doit surmonter à un instant t le rapport signal sur interférence plus bruit que subit le k[ième] terminal mobile.

**2.** Procédé selon la revendication 1, dans lequel la région d'incertitude est définie par un ensemble de K hyper-sphères, chacune desdites K hyper-sphères présentant un rayon $R_k(t)$ et étant centrée au niveau du vecteur d'estimation de canal $\tilde{h}_k(t)$, en respectant de ce fait $\|h_k(t) - \tilde{h}k(t)\| \le R_k(t)$, pour tout $1 \le k \le K$, $h_k(t)$ étant le canal réel vu par le k[ième] terminal mobile, t étant un nombre naturel qui indique un certain instant.

**3.** Procédé selon la revendication 2, dans lequel les K valeurs de la puissance attribuée ($p_k(t)$) qui réduisent au minimum la puissance émise totale par l'émetteur (1) vers les K terminaux mobiles (30 - 1, 30 - 2, ... , 30 - K) tout en garantissant l'exigence de qualité de service ($QoS_k(t)$) pour chacun des K terminaux mobiles (30 - 1, 30 - 2, ... , 30 - K), sont données par :

$$p_k(t) = \mathrm{sinr}_k^0(t)(\mu(t)R_k^2(t) + \sigma^2)$$

pour tout k ∈ {1,2, ... , K} où :

$\sigma^2$ est le bruit thermique généré par l'extrémité frontale de chacun des K terminaux mobiles ;

$\mathrm{sinr}_k^0(t)$ est l'exigence de qualité de service ($QoS_k(t)$) pour chacun des K terminaux mobiles et représente le seuil que doit surmonter à un instant t le rapport signal sur interférence plus bruit que subit le k^ième terminal mobile ;

$\mu(t)$ est une quantité positive scalaire qui est la solution unique à l'équation en virgule fixe suivante :

$$\mu(t) = \lambda_{max}(B(t)\,(\Gamma(t)\,\mu(t) + \Sigma(t))\,B(t)^H),$$

où Γ(t) et Σ(t) sont des matrices diagonales $K \times K$ dont les entrées sont données par :

$$[\Gamma(t)]_{kk} = \mathrm{sinr}_k^0(t)\,R_k^2(t)$$

pour tout $1 \leq k \leq K$

$$[\Sigma(t)]_{kk} = \mathrm{sinr}_k^0(t)\,\sigma^2$$

pour tout $1 \leq k \leq K$

$\lambda_{max}(A)$ représente la valeur propre maximum d'une matrice A ;

$B(t)$ est une matrice $N \times K$ qui représente ladite deuxième transformation linéaire (11 - b, 12 - b) et dépend de la matrice d'estimation de canal $\tilde{H}(t)$, et prend la forme de $B(t) = \tilde{H}(t)^H (\tilde{H}(t)\tilde{H}(t)^H)^{-1}$

4. Procédé selon la revendication 1, dans lequel la région d'incertitude est définie comme étant une hyper-sphère qui présente un rayon R(t) centré au niveau de l'estimation de canal $\tilde{H}(t)$, en respectant de ce fait $\sum_{k=1}^{K} \left\| h_k(t) - \tilde{h}_k(t) \right\|^2 \leq R^2(t)$, $h_k(t)$ étant le vecteur de canal réel vu par le k^ième terminal mobile, t étant un nombre naturel qui indique un certain instant.

5. Procédé selon la revendication 4, dans lequel les K valeurs de la puissance attribuée ($p_k(t)$) qui réduisent au minimum la puissance émise totale par l'émetteur (1) vers les K terminaux mobiles (30 - 1, 30 - 2, ... , 30 - K) tout en garantissant l'exigence de qualité de service ($QoS_k(t)$) pour chacun des K terminaux mobiles (30 - 1, 30 - 2, ... , 30 - K), sont données par :

$$p_k(t) = \mathrm{sinr}_k^0(t)(\mu(t)R^2(t) + \sigma^2)$$

pour tout k ∈ {1, 2, ... , K} où :

$\sigma^2$ est le bruit thermique généré par l'extrémité frontale de chacun des K récepteurs,

$\mathrm{sinr}_k^0(t)$ est l'exigence de QoS ($QoS_k(t)$) pour chacun des K terminaux mobiles et représente le seuil que doit surmonter à un instant t le rapport signal sur interférence plus bruit que subit le k^ième terminal mobile ;

$\mu(t)$ est une quantité positive scalaire qui est la solution unique à l'équation en virgule fixe suivante :

$$\mu(t) = \lambda_{max}(B(t)\,(\Gamma(t)\,\mu(t) + \Sigma(t))\,B(t)^H),$$

où Γ(t) et Σ(t) sont des matrices diagonales $K \times K$ dont les entrées sont données par :

$$[\Gamma(t)]_{kk} = \mathrm{sinr}_k^0(t)\, R^2(t)$$

pour tout $1 \leq k \leq K$,

$$[\Sigma(t)]_{kk} = \mathrm{sinr}_k^0(t)\, \sigma^2$$

pour tout $1 \leq k \leq K$
$\lambda_{max}(A)$ représente la valeur propre maximum d'une matrice A ;
$B(t)$ est une matrice $N \times K$ qui représente ladite deuxième transformation linéaire (11 - b, 12 - b) et dépend de la matrice d'estimation de canal $\tilde{H}(t)$, et prend la forme de $B(t) = \tilde{H}(t)^H (\tilde{H}(t)\tilde{H}(t)^H)^{-1}$.

**6.** Procédé selon la revendication 1, dans lequel la région d'incertitude est définie comme étant un hyper-rectangle centré au niveau de l'estimation de canal $\tilde{H}(t)$, les côtés dudit hyper-rectangle étant définis par $2\rho_1(t)$, $2\rho_2(t)$, ... , $2\rho_k(t)$, $\rho_1(t)$, $\rho_2(t)$, ... , $\rho_k(t)$ étant des nombres réels positifs, en respectant de ce fait :

$$\left|\mathrm{Re}\left\{[h_k(t)]_n - \left[\tilde{h}_k(t)\right]_n\right\}\right| \leq \rho_k(t)$$

$$\left|\mathrm{Im}\left\{[h_k(t)]_n - \left[\tilde{h}_k(t)\right]_n\right\}\right| \leq \rho_k(t)$$

où :

pour tout $1 \leq k \leq K$, $h_k(t)$ étant le canal réel pour le $k^{ième}$ terminal mobile, pour tout $1 \leq n \leq N$, N étant le nombre d'antennes au niveau de l'émetteur (1), t étant un nombre naturel qui indique un certain instant.

**7.** Procédé selon la revendication 6, dans lequel les K valeurs de la puissance attribuée ($p_k(t)$) qui réduisent au minimum la puissance émise totale par l'émetteur (1) vers les K terminaux mobiles (30 - 1, 30 - 2, ... , 30 - K) tout en garantissant l'exigence de qualité de service ($QoS_k(t)$) pour chacun des K terminaux mobiles (30 - 1, 30 - 2, ... , 30 - K), sont obtenus en résolvant le problème linéaire suivant :

$$\mathrm{minimiser}_p\ \mathrm{Trace}\{B(t)\, P(t)\, B(t)^H\}$$

à condition que

$$\delta_{m,k}^{H} B(t)\, P(t)\, B(t)^{H}\, \delta_{m,k} - p_k(t)/\mathrm{sinr}_k^0(t) + \sigma^2 \quad \le 0$$

$$\forall\, k \in \{1, 2, \ldots, K\}, m \in \{1, 2, \ldots, 2^{2N}\}$$

où :

*P(t)* est une matrice diagonale $K \times K$ telle que $P(t) = P^{1/2}(t)\, P^{1/2}(t)$, les entrées de *P(t)* étant donc données par $[P(t)]_{kk} = p_k(t)$,
$p^{1/2}(t)$ étant une matrice diagonale $K \times K$ qui représente la première transformation linéaire (11 - a) ;
*B(t)* est une matrice $N \times K$ qui représente ladite deuxième transformation linéaire (11 - b, 12 - b) et dépend de la matrice d'estimation de canal $\tilde{H}(t)$, et prend la forme de $B(t) = \tilde{H}(t)^H (\tilde{H}(t)\tilde{H}(t)^H)^{-1}$;

$\mathrm{sinr}_k^0(t)$ est l'exigence de qualité de service ($QoS_k(t)$) pour chacun des K terminaux mobiles et représente le seuil que doit surmonter à un instant t le rapport signal sur interférence plus bruit que subit le k[ième] terminal mobile ;
$\delta_{m,k}$ est un vecteur $N \times 1$, les parties réelle et imaginaire de ses entrées ne pouvant prendre que l'une de deux valeurs : $\rho_k(t)$ ou - $\rho_k(t)$, où m est un nombre naturel qui est compris entre 1 et $2^{2N}$ ; et
$\sigma^2$ est le bruit thermique généré par l'extrémité frontale de chacun des K terminaux mobiles.

**8.** Procédé selon l'une quelconque des revendications précédentes, dans lequel l'étape consistant à acquérir au niveau de l'émetteur (1) lesdites valeurs d'estimation de canal, se fait en recevant au niveau des N antennes (14 - 1, 14 - 2, ... , 14 - N) des informations en provenance de K terminaux mobiles (30 - 1, 30 - 2, ... , 30 - K) et en en utilisant lesdites informations de manière à estimer le canal dans la liaison descendante.

**9.** Procédé selon l'une quelconque des revendications 1 à 7, dans lequel l'étape consistant à acquérir au niveau de l'émetteur (1) lesdites valeurs d'estimation de canal comprend les étapes consistant à :

- mesurer le canal au niveau de ladite ou de chacune desdites antennes mobiles (40 - $1_1$, 40 - $1_2$, ... , 40 - $1_{Z1}$, 40 - $2_1$, 40 - $2_2$, ... , 40 - $2_{Z2}$, 40 - $K_1$, 40 - $K_2$, ... , 40 - $K_{Z_K}$) de chacun des K terminaux mobiles (30 - 1, 30 - 2, ... , 30 - K), ledit canal comprenant N réponses de canal en provenance des N antennes (14 - 1, 14 - 2, ... , 14 - N) de l'émetteur (1) ;
- envoyer chacun des canaux mesurés dans l'étape précédente à l'émetteur (1) de façon acquérir lesdites valeurs d'estimation de canal par l'intermédiaire d'un canal de rétroaction.

**10.** Procédé selon l'une quelconque des revendications précédentes, comprenant en outre l'étape consistant à attribuer chacun desdits N symboles transformés de manière linéaire ($LTS_1(t)$, $LTS_2(t)$, ... , $LTS_N(t)$) à une extrémité frontale radioélectrique différente d'un ensemble de N extrémités frontales radioélectriques (13 - 1, 13 - 2, ... , 13 - N) de façon à exécuter une émission.

**11.** Émetteur (1) comprenant des moyens aptes à exécuter les étapes du procédé selon l'une quelconque des revendications 1 à 10.

**12.** Station de base comprenant au moins un émetteur (1) selon la revendication 11.

**13.** Système de communications mobiles comprenant au moins une station de base selon la revendication 12.

**14.** Programme informatique comprenant des moyens de code de programme informatique aptes à exécuter les étapes du procédé selon l'une quelconque des revendications 1 à 10 lorsque ledit programme est exécuté sur un ordinateur, un processeur de signaux numériques, un réseau prédiffusé programmable par l'utilisateur, un circuit intégré à application spécifique, un microprocesseur, un microcontrôleur, ou toute autre forme de matériel programmable.

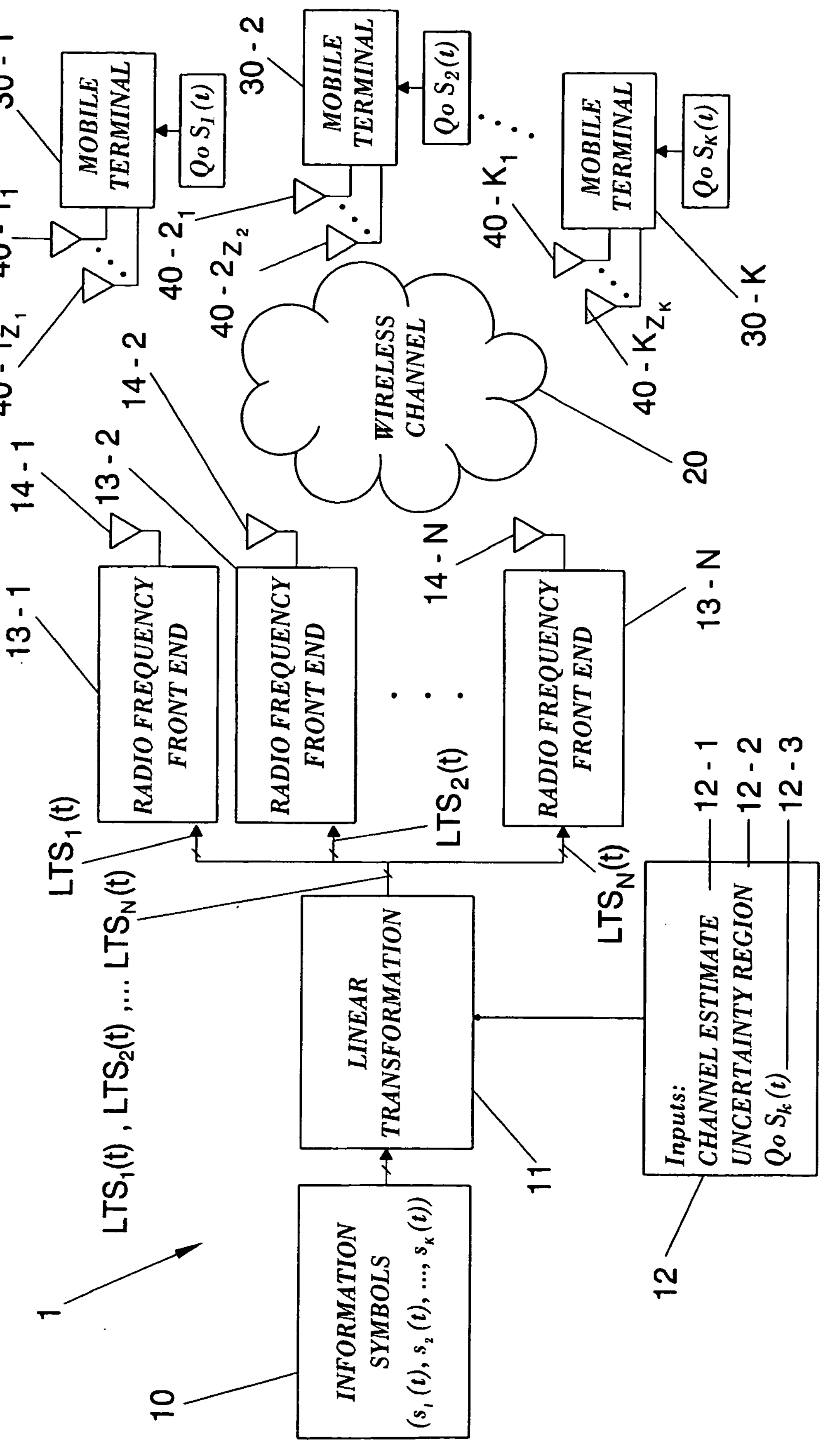
1
10
INFORMATION SYMBOLS $(s_1(t), s_2(t), ..., s_K(t))$
11
LINEAR TRANSFORMATION
12
Inputs:
CHANNEL ESTIMATE
UNCERTAINTY REGION
$QoS_k(t)$
12 - 1
12 - 2
12 - 3
$LTS_1(t)$ , $LTS_2(t)$ ,... $LTS_N(t)$
$LTS_1(t)$
$LTS_2(t)$
$LTS_N(t)$
13 - 1
13 - 2
13 - N
RADIO FREQUENCY FRONT END
RADIO FREQUENCY FRONT END
RADIO FREQUENCY FRONT END
14 - 1
14 - 2
14 - N
WIRELESS CHANNEL
20
$40 - 1_1$
$40 - 1_{Z_1}$
$40 - 2_1$
$40 - 2_{Z_2}$
$40 - K_1$
$40 - K_{Z_K}$
MOBILE TERMINAL
MOBILE TERMINAL
MOBILE TERMINAL
$QoS_1(t)$
$QoS_2(t)$
$QoS_K(t)$
30 - 1
30 - 2
30 - K

FIG. 1

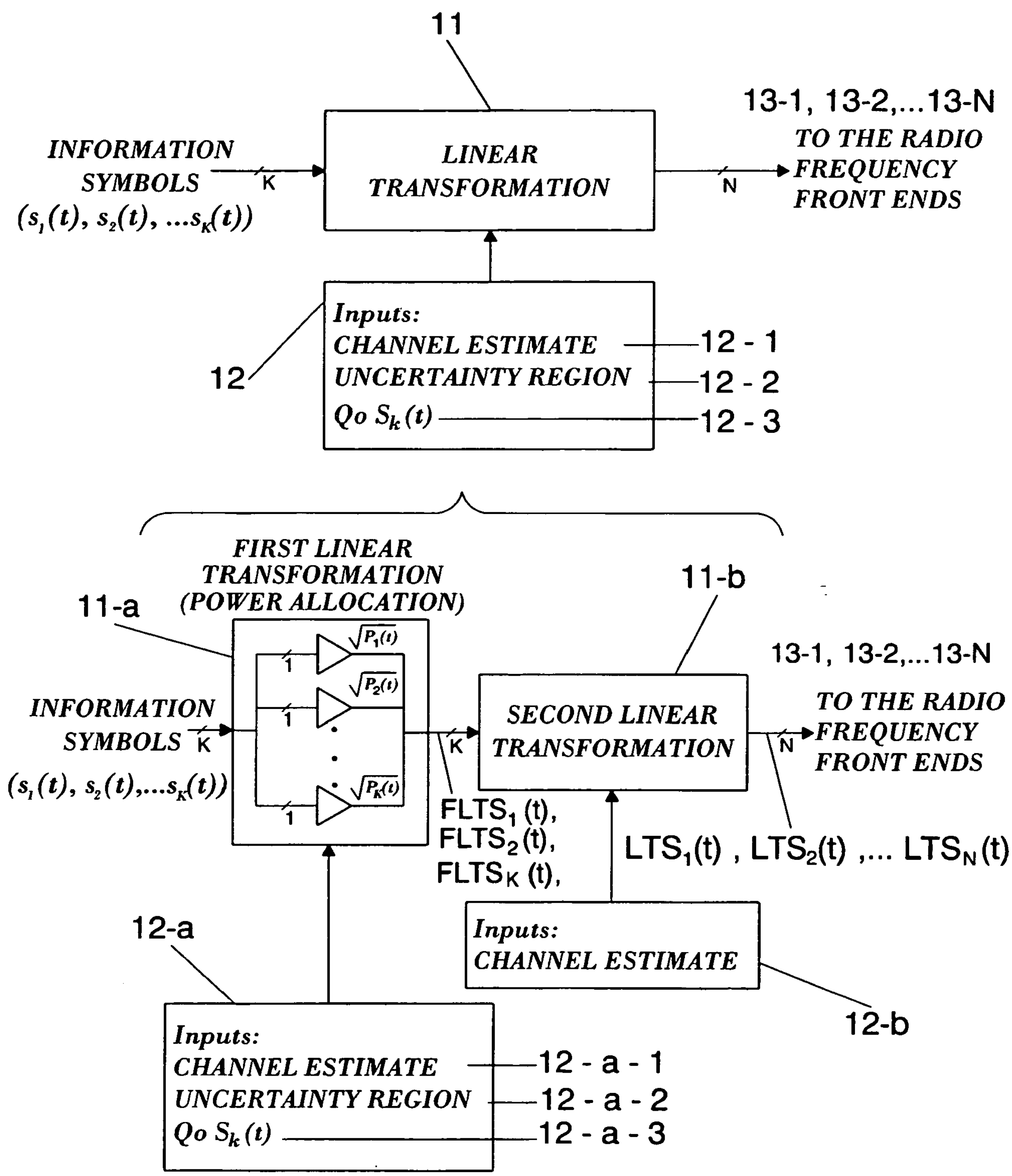
11
INFORMATION SYMBOLS
(s1(t), s2(t), ...sK(t))
K
LINEAR TRANSFORMATION
N
13-1, 13-2,...13-N
TO THE RADIO FREQUENCY FRONT ENDS
12
Inputs:
CHANNEL ESTIMATE
UNCERTAINTY REGION
Qo Sk(t)
12 - 1
12 - 2
12 - 3
FIRST LINEAR TRANSFORMATION (POWER ALLOCATION)
11-a
11-b
INFORMATION SYMBOLS
K
(s1(t), s2(t),...sK(t))
1
√P1(t)
√P2(t)
√PK(t)
K
SECOND LINEAR TRANSFORMATION
N
13-1, 13-2,...13-N
TO THE RADIO FREQUENCY FRONT ENDS
FLTS1 (t),
FLTS2 (t),
FLTSK (t),
LTS1(t) , LTS2(t) ,... LTSN(t)
12-a
Inputs:
CHANNEL ESTIMATE
12-b
Inputs:
CHANNEL ESTIMATE
UNCERTAINTY REGION
Qo Sk(t)
12 - a - 1
12 - a - 2
12 - a - 3

FIG. 2

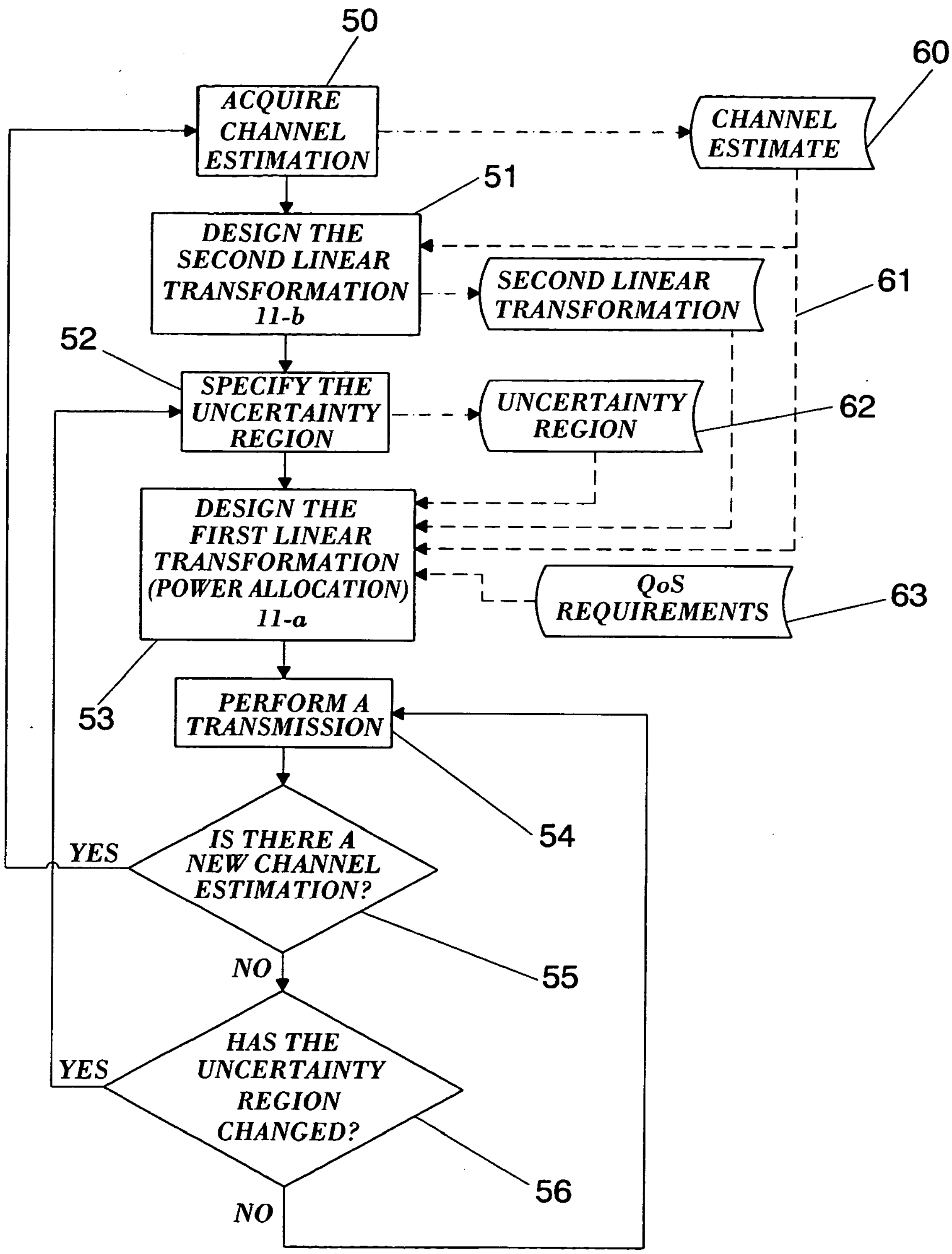
50
ACQUIRE CHANNEL ESTIMATION
60
CHANNEL ESTIMATE
51
DESIGN THE SECOND LINEAR TRANSFORMATION 11-b
SECOND LINEAR TRANSFORMATION
61
52
SPECIFY THE UNCERTAINTY REGION
UNCERTAINTY REGION
62
DESIGN THE FIRST LINEAR TRANSFORMATION (POWER ALLOCATION) 11-a
QoS REQUIREMENTS
63
53
PERFORM A TRANSMISSION
54
YES
IS THERE A NEW CHANNEL ESTIMATION?
55
NO
YES
HAS THE UNCERTAINTY REGION CHANGED?
56
NO

FIG. 3

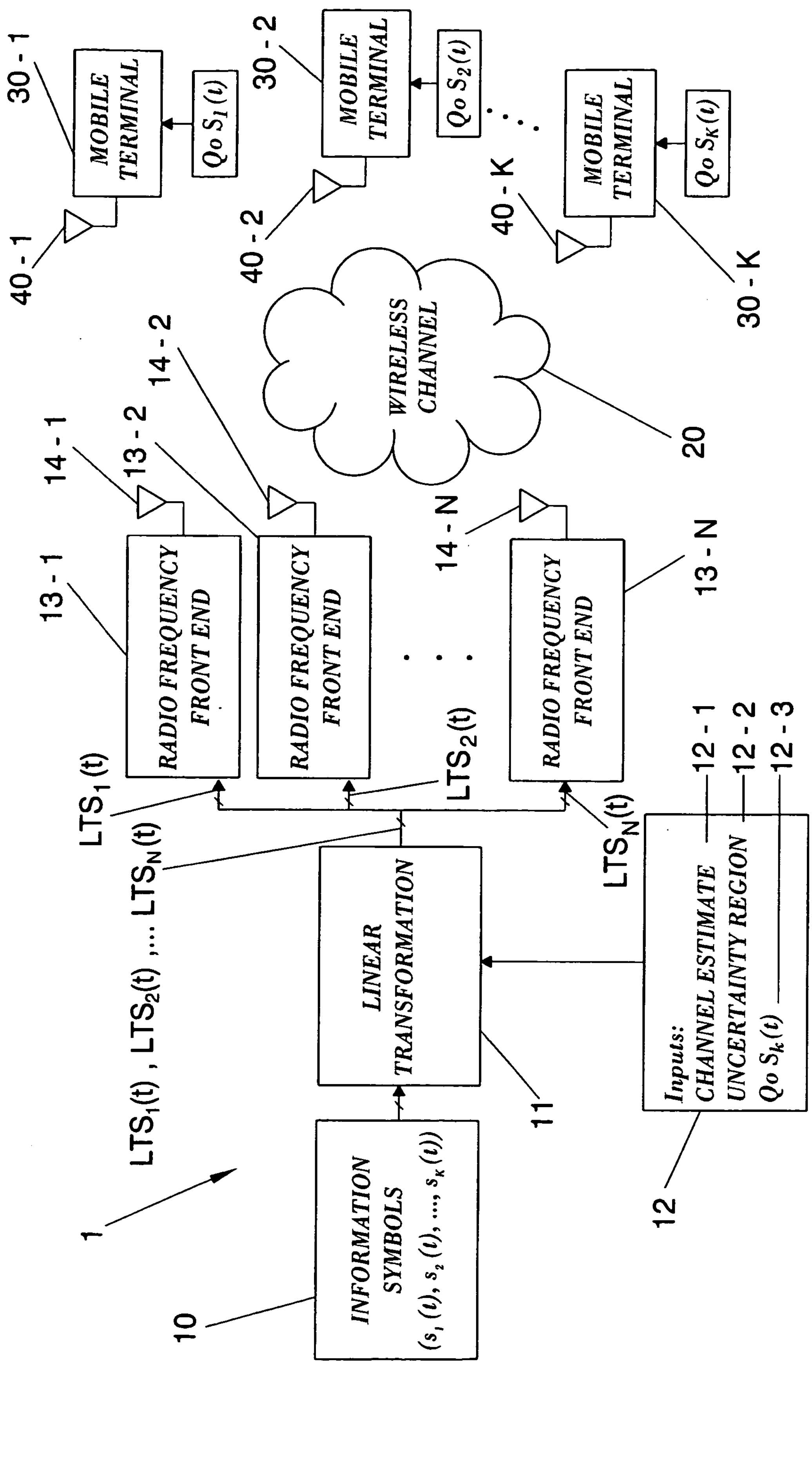
1
10
INFORMATION SYMBOLS
(s_1(t), s_2(t), ..., s_K(t))
LINEAR TRANSFORMATION
11
LTS1(t), LTS2(t), ..., LTSN(t)
LTS1(t)
LTS2(t)
LTSN(t)
RADIO FREQUENCY FRONT END
13 - 1
13 - 2
13 - N
14 - 1
14 - 2
14 - N
WIRELESS CHANNEL
20
Inputs:
CHANNEL ESTIMATE
UNCERTAINTY REGION
Qo Sk(t)
12
12 - 1
12 - 2
12 - 3
MOBILE TERMINAL
Qo S1(t)
Qo S2(t)
Qo SK(t)
30 - 1
30 - 2
30 - K
40 - 1
40 - 2
40 - K

FIG. 4

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description


- Optimal and Suboptimal Transmit Beamforming. **M. Bengtsson ; B. Ottersten.** Handbook of Antennas in Wireless Communications. CRC Press, August 2001
- **M. Schubert ; H. Boche.** Solution of the multiuser downlink beamforming problem with individual SINR constraints. *IEEE Trans. On Vehicular Technology,* January 2004, vol. 53 (1), 18-28
- Convex optimization theory applied to joint transmitter-receiver design in MIMO channels. **D. Pérez ; A. Pascual ; J.M. Cioffi ; M.A. Lagunas.** SPACE-TIME PROCESSING FOR MIMO COMMUNICATIONS. 2005, 269-317
- **M. Bengtsson.** Robust and constrained downlink beamforming. *Proc. European Signal Processing Conference,* September 2000
- **M. Biguesh ; S. Shahbazpanahi ; A. B. Gershman.** Robust downlink power control in wireless cellular systems. *EURASIP Journal on Wireless Communications and Networking,* 2004, vol. 2, 261-272